# EUROPEAN PATENT SPECIFICATION

(11) **EP 4 357 701 B1**
(45) Date of publication and mention of the grant of the patent: **15.04.2026**
(21) Application number: 22849260.9
(22) Date of filing: 13.07.2022
(51) Int. Cl.: F25B 27/00, B63B 25/16, F01D 25/32, F01K 9/00, F25B 43/00, F28F 27/00, F01K 25/10

(54) **COLD RECOVERY SYSTEM AND STARTUP METHOD FOR COLD RECOVERY SYSTEM**
KÄLTERÜCKGEWINNUNGSSYSTEM UND STARTVERFAHREN FÜR EIN KÄLTERÜCKGEWINNUNGSSYSTEM
SYSTÈME DE RÉCUPÉRATION DE FROID ET PROCÉDÉ DE DÉMARRAGE POUR SYSTÈME DE RÉCUPÉRATION DE FROID

(30) Priority: 30.07.2021 JP 2021125923
(43) Date of publication of application: 24.04.2024
(73) Proprietor: Mitsubishi Heavy Industries Marine Machinery & Equipment Co., Ltd., Nagasaki-shi Nagasaki 850-8610 (JP)
(72) Inventor: HIRADO, Takuma, Tokyo 100-8332 (JP); TAKATA, Ryo, Tokyo 100-8332 (JP); SAITOH, Eiji, Nagasaki 850-8610 (JP); KAWANAMI, Akira, Nagasaki 850-8610 (JP)
(74) Representative: Hoffmann Eitle
(86) International application number: PCT/JP2022/027533
(87) International publication number: WO 2023/008196

(56) References cited:
- CN-A- 103 712 366
- JP-A- 2007 163 072
- JP-A- 2021 085 443
- JP-A- 2021 085 443
- KR-A- 20210 021 179
- US-A1- 2008 299 848

## Description

### Technical Field

The present invention relates to a cold recovery system and a startup method for the cold recovery system for recovering cold energy of a liquefied gas.

### Background Art

A liquefied gas (for example, liquefied natural gas) is liquefied for the purpose of transportation or storage and is vaporized by a raised temperature of the liquefied gas with a heat medium, such as seawater, in being supplied to a supply destination such as city gas or a thermal power plant. In a case where the liquefied gas is vaporized, cold energy of the liquefied gas may be recovered instead of being discarded in seawater (for example, see Patent Literature cited below PTL 1).

PTL 1 discloses a cold power generation cycle in which the cold energy of the liquefied natural gas is recovered as electric power. A secondary medium Rankin cycle method or the like is known as the cold power generation cycle (refer to PTL 1). In the secondary medium Rankin cycle method, a secondary medium circulating in a closed loop is heated and evaporated by an evaporator using seawater as a heat source, the vapor is introduced into a turbine for cold power generation to obtain power, and then cooling and condensing are performed with the liquefied natural gas.

It is difficult to establish land-based LNG bases corresponding to respective supply destinations of the liquefied natural gas since the establishment needs cost to secure land and the like. Thus, a ship equipped with an LNG storage facility for storing the liquefied natural gas or a regasification facility for regasifying the liquefied natural gas may be moored at sea, and the liquefied natural gas regasified by the ship may be sent to a supply destination on land, a power gauge (floating structure type power plant), or the like at sea via a pipeline.

Since a ship is less expandable than a land-based facility, it is important to perform miniaturization of a cold power generation system, particularly a miniaturization of a heat exchanger, in order to mount a cold power generation facility. Examples of the small-sized heat exchanger include a printed circuit heat exchanger (PCHE) and a plate type heat exchanger. PTL 2 was further found to disclose matter that relates to the preamble of the independent claims.

### Citation List

### Patent Literature

[PTL 1] Japanese Unexamined Utility Model Application, First Publication No. S61-59803
[PTL 2] JP 2021-085443 A

### Summary of Invention

### Technical Problem

When a temperature of the other heat exchange target is lower than a freezing point of one heat exchange target, there is a risk that one heat exchange target is frozen by the heat exchange in the heat exchanger, the frozen heat exchange target adheres to a surface of the heat exchanger, and the heat exchanger is blocked. A small-sized heat exchanger has a higher risk of blockage of the heat exchanger than a large-sized heat exchanger (for example, a shell-tube type heat exchanger) and thus has an issue in reliability.

In the cold power generation cycle, the heat exchanger may freeze when the secondary medium circulating in the cold power generation cycle is cooled by the liquefied natural gas in the heat exchanger. In particular, there is a high possibility that the heat exchanger freezes since a temperature of the secondary medium is lower, than during a steady operation, at a time of startup of the cold power generation cycle in which a flow rate of the secondary medium circulating in the cold power generation cycle is small. In order to prevent the heat exchanger from freezing, it is conceivable to provide a heating line that preheats the liquefied natural gas supplied to the heat exchanger. However, such a heating line is not preferable since it leads to an increase in the size and cost of a system with the cold power generation cycle.

Further, in order to prevent the heat exchanger from freezing, it is conceivable to increase the flow rate of the secondary medium circulating in the cold power generation cycle at the time of startup of the cold power generation cycle. However, heat input from ambient air to the cold power generation cycle when the cold power generation cycle is stopped may cause the secondary medium to vaporize in the cold power generation cycle. For this reason, a ratio of a gas-phase secondary medium in a circulation pump for circulating the secondary medium is larger at the time of startup of the cold power generation cycle than during the steady operation of the cold power generation cycle. When a circulation amount of the circulation pump for circulating the secondary medium is increased, there is an issue that a startup failure is highly likely to occur due to gas entrainment of the circulation pump at the time of startup of the cold power generation cycle.

In view of the above circumstances, an object of at least one embodiment of the present invention is to provide a cold recovery system and a startup method for the cold recovery system capable of suppressing blockage of a heat exchanger at a time of startup of the cold recovery system. Solution to Problem

A cold recovery system according to an embodiment of the present invention is
a cold recovery system that is installed in a ship or a floating structure having a liquefied gas storage device configured to store a liquefied gas and includes
a first heat exchanger that is configured to transfer cold energy from the liquefied gas extracted from the liquefied gas storage device to a heat medium for cold,
a cold recovery cycle that is configured to circulate the heat medium for cold and includes at least a pump for cold to send the heat medium for cold provided on a downstream side of the first heat exchanger,
a second heat exchanger that is configured to transfer heat energy from a heat medium to the heat medium for cold that flows on a downstream side of the pump for cold and an upstream side of the first heat exchanger in the cold recovery cycle,
a gas-liquid separator that is provided between the first heat exchanger and the pump for cold in the cold recovery cycle and is configured to separate the heat medium for cold into a gas-phase heat medium for cold and a liquid-phase heat medium for cold,
a liquid return line for returning the liquid-phase heat medium for cold to the gas-liquid separator from the downstream side of the pump for cold and an upstream side of the second heat exchanger in the cold recovery cycle, and
a third heat exchanger that is configured to transfer the cold energy of the liquefied gas extracted from the liquefied gas storage device to any one of the liquid-phase heat medium for cold returned to the gas-liquid separator via the liquid return line or the heat medium for cold inside the gas-liquid separator.

A startup method for a cold recovery system according to an embodiment of the present invention is
a startup method for a cold recovery system that is installed in a ship or a floating structure having a liquefied gas storage device configured to store a liquefied gas,
in which the cold recovery system includes
a first heat exchanger that is configured to transfer cold energy from the liquefied gas extracted from the liquefied gas storage device to a heat medium for cold,
a cold recovery cycle that is configured to circulate the heat medium for cold and includes at least a pump for cold to send the heat medium for cold provided on a downstream side of the first heat exchanger, and
a second heat exchanger that is configured to transfer heat energy from a heat medium to the heat medium for cold that flows on a downstream side of the pump for cold and an upstream side of the first heat exchanger in the cold recovery cycle, and
the startup method for the cold recovery system includes
a gas-liquid separation step of separating the heat medium for cold into a gas-phase heat medium for cold and a liquid-phase heat medium for cold by a gas-liquid separator that is provided between the first heat exchanger and the pump for cold in the cold recovery cycle,
a circulation step of returning the liquid-phase heat medium for cold, which is separated in the gas-liquid separation step by drive of the pump for cold, to the gas-liquid separator via a liquid return line for connecting the downstream side of the pump for cold and an upstream side of the second heat exchanger in the cold recovery cycle with the gas-liquid separator, and
a cooling step of transferring, for cooling, the cold energy of the liquefied gas extracted from the liquefied gas storage device to any one of the liquid-phase heat medium for cold returned to the gas-liquid separator via the liquid return line or the heat medium for cold inside the gas-liquid separator, in the circulation step.

### Advantageous Effects of Invention

According to at least one embodiment of the present invention, there is provided the cold recovery system and the startup method for the cold recovery system capable of suppressing the blockage of the heat exchanger at the time of startup of the cold recovery system.

### Brief Description of Drawings

Fig. 1 is a schematic configuration diagram schematically showing a configuration of a ship or a floating structure provided with a cold recovery system according to an embodiment of the present invention.
Fig. 2 is a flowchart of a startup method for the cold recovery system according to an embodiment of the present invention.
Fig. 3 is an explanatory diagram for describing an example of control in the cold recovery system according to an embodiment of the present invention.
Fig. 4 is a schematic configuration diagram schematically showing a configuration of the ship or the floating structure provided with the cold recovery system according to an embodiment of the present invention.
Fig. 5 is a schematic configuration diagram schematically showing a configuration of the ship or the floating structure provided with the cold recovery system according to an embodiment of the present invention.
Fig. 6 is a schematic configuration diagram schematically showing a configuration of the ship or the floating structure provided with the cold recovery system according to an embodiment of the present invention.
Fig. 7 is a schematic configuration diagram schematically showing a configuration of the ship or the floating structure provided with the cold recovery system according to an embodiment of the present invention.
Fig. 8 is a schematic configuration diagram schematically showing a configuration of the ship or the floating structure provided with the cold recovery system according to an embodiment of the present invention.
Fig. 9 is an explanatory diagram for describing a control device for the cold recovery system according to an embodiment of the present invention.

### Description of Embodiments

Hereinafter, some embodiments of the present invention will be described with reference to accompanying drawings. However, dimensions, materials, shapes, relative dispositions, and the like of components, which are described as the embodiments or shown in the drawings, are not intended to limit the scope of the present invention as defined by the appended claims and are merely explanatory examples.

For example, expressions such as "in a certain direction", "along a certain direction", "parallel", "orthogonal", "center", and "concentric" or "coaxial", which represent relative or absolute dispositions, not only strictly represent such a disposition but also represent a state of relative displacement with a tolerance or at an angle or distance to the extent that the same function can be obtained.

For example, expressions such as "identical", "equal", and "homogeneous", which represent that things are in an equal state, not only strictly represent the equal state but also represent a state where a tolerance or a difference to the extent that the same function can be obtained is present.

For example, an expression representing a shape such as a quadrangular shape or a cylindrical shape not only represents a shape such as a quadrangular shape or a cylindrical shape in a geometrically strict sense but also represents a shape including an undulating portion, a chamfering portion, or the like within a range where the same effect can be obtained.

On the other hand, an expression of "provided with", "including", or "having" one component is not an exclusive expression excluding the presence of other components.

The same reference numerals may be assigned to the same configurations, and description thereof may be omitted.

### (Ship, Floating Structure)

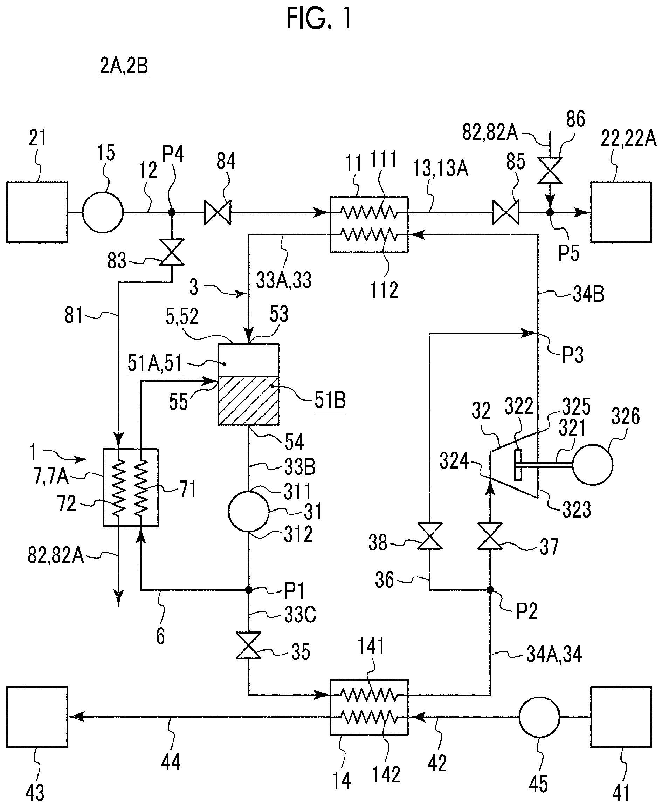

Fig. 1 is a schematic configuration diagram schematically showing a configuration of a ship 2A or a floating structure 2B provided with a cold recovery system 1 according to an embodiment of the present invention. As shown in Fig. 1, the cold recovery system 1 according to some embodiments is installed in the ship 2A or the floating structure 2B. The ship 2A or the floating structure 2B is a structure capable of floating on water. The ship 2A or the floating structure 2B has a liquefied gas storage device (for example, liquefied gas tank) 21 configured to store a liquefied gas and the cold recovery system 1. In the illustrated embodiment, the ship 2A or the floating structure 2B is a structure configured to have a propulsion unit (not shown), such as a propeller, and a propulsion device (not shown) configured to drive the propulsion unit and to drive the propulsion device to be self-propelled. The present invention is also applicable to a case where the ship 2A or the floating structure 2B is a non-self-propelled structure that does not have a propulsion device for self-propelled.

### (Cold Recovery System)

As shown in Fig. 1, the cold recovery system 1 is provided with a first heat exchanger 11, a liquefied gas supply line 12 for supplying the liquefied gas from a liquefied gas storage device 21 to a first heat exchanger 11, a vaporized gas supply line 13 for supplying a vaporized gas generated by the vaporization of the liquefied gas in the first heat exchanger 11, a cold recovery cycle 3 configured to circulate a heat medium for cold heat exchanged with the liquefied gas in the first heat exchanger 11, a second heat exchanger **14,** and a gas-liquid separator 5.

### (Cold Recovery Cycle)

The cold recovery cycle 3 is configured to circulate the heat medium for cold under an organic Rankin cycle. In the following description, an upstream side in a circulation direction of the heat medium for cold in the cold recovery cycle 3 may be simply referred to as an upstream side, and a downstream side in the circulation direction may be simply referred to as a downstream side. The cold recovery cycle 3 includes a pump for cold 31 to send the heat medium for cold and a turbine for cold 32 configured to be driven by the heat medium for cold. The pump for cold 31 is provided on a downstream side of the first heat exchanger 11 and an upstream side of the second heat exchanger 14 in the cold recovery cycle 3. The turbine for cold 32 is provided on an upstream side of the first heat exchanger 11 and a downstream side of the second heat exchanger 14 in the cold recovery cycle 3.

Hereinafter, a liquefied natural gas (LNG) as a specific example of the liquefied gas supplied from the liquefied gas storage device 21, which is a supply source of the liquefied gas, will be described with propane as a specific example of the heat medium for cold circulating in the cold recovery cycle 3 as an example. However, the present invention is also applicable to a case where a liquefied gas (liquefied petroleum gas, liquid hydrogen, or the like) other than the liquefied natural gas is used as the liquefied gas supplied from the liquefied gas storage device 21. The present invention is also applicable to a case where a heat medium other than propane (for example, an organic medium) is used as the heat medium for cold that flows in the cold recovery cycle 3. The heat medium for cold has a boiling point and a freezing point lower than that of water.

### (First Heat Exchanger)

The first heat exchanger (liquefied gas vaporizer, cold-side condenser) 11 is configured to exchange heat between the liquefied gas sent from the liquefied gas supply line 12 and the heat medium for cold flowing on a downstream side of the turbine for cold 32 and an upstream side of the pump for cold 31 in the cold recovery cycle 3. In the illustrated embodiment, the first heat exchanger 11 includes a first liquefied-gas-side flow path 111 through which the liquefied gas sent from the liquefied gas supply line 12 flows and a first cold-side flow path 112 through which the heat medium for cold circulating in the cold recovery cycle 3 flows. A temperature of the liquefied gas flowing through the first liquefied-gas-side flow path 111 is lower than that of the heat medium for cold flowing through the first cold-side flow path 112.

In the first heat exchanger 11, with the heat exchange between the liquefied gas flowing through the first liquefied-gas-side flow path 111 and the heat medium for cold flowing through the first cold-side flow path 112, cold energy of the liquefied gas flowing through the first liquefied-gas-side flow path 111 is transferred to the heat medium for cold flowing through the first cold-side flow path 112. Accordingly, the liquefied gas flowing through the first liquefied-gas-side flow path 111 is heated and vaporized, and the heat medium for cold flowing through the first cold-side flow path 112 is cooled and condensed.

### (Second Heat Exchanger)

The second heat exchanger (cold-side evaporator) 14 is configured to exchange heat between external water (heat medium) introduced from the outside of the cold recovery system 1 and the heat medium for cold flowing on a downstream side of the pump for cold 31 and an upstream side of the turbine for cold 32 in the cold recovery cycle 3. In the illustrated embodiment, the second heat exchanger 14 includes a second cold-side flow path 141 through which the heat medium for cold flows and a heat-medium-side flow path 142 through which the external water flows. The second cold-side flow path 141 (second heat exchanger 14) is provided on the downstream side of the pump for cold 31 and the upstream side of the turbine for cold 32 in the cold recovery cycle 3. A temperature of the external water flowing through the heat-medium-side flow path 142 is higher than that of the heat medium for cold flowing through the second cold-side flow path 141.

In the second heat exchanger 14, with the heat exchange between the heat medium for cold flowing through the second cold-side flow path 141 and the external water flowing through the heat-medium-side flow path 142, heat energy of the external water flowing through the heat-medium-side flow path 142 is transferred to the heat medium for cold flowing through the second cold-side flow path 141. Accordingly, the heat medium for cold flowing through the second cold-side flow path 141 is heated and vaporized.

### (Liquefied Gas Supply System)

One side (upstream end) of the liquefied gas supply line 12 is connected to the liquefied gas storage device 21, and the other side (downstream end) of the liquefied gas supply line 12 is connected to an upstream end (gas inlet of the first heat exchanger 11) of the first liquefied-gas-side flow path 111. One side (upstream end) of the vaporized gas supply line 13 is connected to a downstream end (gas outlet of the first heat exchanger 11) of the first liquefied-gas-side flow path 111, and the other side (downstream end) of the vaporized gas supply line 13 is connected to a vaporized gas supply destination 22. The vaporized gas supply destination 22 may be a facility provided outside the ship 2A or the floating structure 2B (for example, power generation facility or gas storage facility on land) or may be a facility mounted on the ship 2A or the floating structure 2B.

The cold recovery system 1 is further provided with a pump for liquefied gas 15 provided in the liquefied gas supply line 12. The pump for liquefied gas 15 has a rotor blade (not shown) provided in the liquefied gas supply line 12 and is configured to rotate this rotor blade by electric power or the like supplied to the pump for liquefied gas 15 to send the liquefied gas to a downstream side (side where the first heat exchanger 11 is located) of the liquefied gas supply line 12. With drive of the pump for liquefied gas 15, the liquefied gas stored in the liquefied gas storage device 21 is extracted to the liquefied gas supply line 12 and is sent to the first liquefied-gas-side flow path 111 of the first heat exchanger 11 through the liquefied gas supply line 12. The vaporized gas generated by the vaporization of the liquefied gas in the first liquefied-gas-side flow path 111 of the first heat exchanger 11 is sent to the gas supply destination 22 through the vaporized gas supply line 13 by the pump for liquefied gas 15.

### (External Water Supply System)

The cold recovery system 1 is further provided with an external water supply line 42 for supplying the external water from an external water supply source 41 to a heat exchanger (second heat exchanger 14) using the external water of the cold recovery system 1 as a heat medium, an external water discharge line 44 for discharging the external water discharged from the heat exchanger using the external water as the heat medium to an external water discharge destination 43, and a pump for external water 45 provided in the external water supply line 42.

One side (upstream end) of the external water supply line 42 is connected to the external water supply source 41, and the other side (downstream end) of the external water supply line 42 is connected to an upstream end (heat medium inlet of the second heat exchanger 14) of the heat-medium-side flow path 142. One side (upstream end) of the external water discharge line 44 is connected to a downstream end (heat medium outlet of the second heat exchanger 14) of the heat-medium-side flow path 142, and the other side (downstream end) of the external water discharge line 44 is connected to the external water discharge destination 43. The external water may be any water that can heat a heat exchange target as a heat medium in the heat exchanger (water having a temperature higher than that of the heat exchange target) and may be water at room temperature. As the external water, water (for example, outboard water such as seawater or engine cooling water obtained by cooling engine of ship 2A) that is easily available in the ship 2A or the floating structure 2B is preferable.

The external water supply source 41 may be an intake port provided in the ship 2A or the floating structure 2B to take in the external water (for example, seawater) from the outside of the ship 2A or the floating structure 2B, or may be a facility (for example, water storage tank) provided inside the ship 2A or the floating structure 2B. Further, the external water discharge destination 43 may be a drain port provided in the ship 2A or the floating structure 2B for discharging the external water to the outside of the ship 2A or the floating structure 2B, or may be a facility (for example, wastewater tank) provided inside the ship 2A or the floating structure 2B.

The pump for external water 45 has a rotor blade (not shown) provided in the external water supply line 42 and is configured to rotate this rotor blade by electric power or the like supplied to the pump for external water 45 to send the external water to a downstream side (side where the second heat exchanger 14 is located) of the external water supply line 42. With drive of the pump for external water 45, external water is extracted from the external water supply source 41 to the external water supply line 42 and is sent to the heat exchanger (the second heat exchanger 14) using the external water as a heat medium through the external water supply line 42.

### (Heat Medium for Cold Circulation System)

As shown in Fig. 1, the cold recovery cycle 3 further includes a first connection line 33 and a second connection line 34. The first connection line 33 connects a downstream end (outlet of the heat medium for cold of the first heat exchanger 11) of the first cold-side flow path 112 and an upstream end (inlet of the heat medium for cold of the second heat exchanger 14) of the second cold-side flow path 141. The pump for cold 31 described above is provided in the first connection line 33. The second connection line 34 connects a downstream end (outlet of the heat medium for cold of the second heat exchanger 14) of the second cold-side flow path 141 and an upstream end (inlet of the heat medium for cold of the first heat exchanger 11) of the first cold-side flow path 112. The turbine for cold 32 described above is provided in the second connection line 34.

### (Gas-Liquid Separator)

The gas-liquid separator 5 is configured to separate the heat medium for cold into a gas phase and a liquid phase. The gas-liquid separator 5 is provided on a downstream side of the first cold-side flow path 112 (the first heat exchanger 11) and on the upstream side of the pump for cold 31 in the cold recovery cycle 3. Specifically, the gas-liquid separator 5 is provided on the upstream side of the pump for cold 31 in the first connection line 33.

The gas-liquid separator 5 includes a main body portion 52 configured to internally define an internal space 51 into which the heat medium for cold, which has been sent from the first cold-side flow path 112 (the first heat exchanger 11), is introduced through the first connection line 33, an introduction inlet 53 for introducing the heat medium for cold into the internal space 51, and a liquid-phase discharge port 54 for discharging a liquid-phase heat medium for cold to the outside of the gas-liquid separator 5 from the internal space 51.

The internal space 51 includes a lower-side storage space 51B in which the liquid-phase heat medium for cold is stored and an upper-side storage space 51A, which is provided to communicate with the lower-side storage space 51B above the lower-side storage space 51B, in which a gas-phase heat medium for cold is stored. The liquid-phase discharge port 54 communicates with the lower-side storage space 51B.

The first connection line 33 described above includes a first upper-stage connection line 33A connecting the downstream end of the first cold-side flow path 112 and the introduction inlet 53, a first middle-stage connection line 33B connecting the liquid-phase discharge port 54 and a pump inlet 311 of the pump for cold 31, and a first lower-stage connection line 33C connecting a pump outlet 312 of the pump for cold 31 and the upstream end of the second cold-side flow path 141.

The heat medium for cold cooled by the first heat exchanger 11 is guided to the gas-liquid separator 5 through the first upper-stage connection line 33A. The heat medium for cold that has flowed into the internal space 51 from the introduction inlet 53 is separated into a liquid phase and a gas phase in the internal space 51.

### (Pump for Cold)

The pump for cold 31 is configured to send the heat medium for cold to the downstream side (side where the second heat exchanger 14 is located) of the cold recovery cycle 3. The pump for cold 31 has a rotor blade (not shown) provided in the first connection line 33 and is configured to rotate this rotor blade by electric power or the like supplied to the pump for cold 31 to send the liquid-phase heat medium for cold to a downstream side of the first connection line 33.

With drive of the pump for cold 31, the liquid-phase heat medium for cold stored in the lower-side storage space 51B is guided to the pump for cold 31 through the liquid-phase discharge port 54 and the first middle-stage connection line 33B to be pressurized by the pump for cold 31. The liquid-phase heat medium for cold pressurized by the pump for cold 31 is sent to the second cold-side flow path 141 (second heat exchanger 14) through the first lower-stage connection line 33C by the pump for cold 31.

### (Pump for Cold-Related Equipment)

As shown in Fig. 1, the cold recovery system 1 is further provided with a liquid return line 6 for returning the liquid-phase heat medium for cold to the gas-liquid separator 5 from the downstream side of the pump for cold 31 and the upstream side of the second heat exchanger 14 in the cold recovery cycle 3 and a first flow regulation valve 35 provided between a connecting portion P1 with an upstream end of the liquid return line 6 and the second heat exchanger 14 in the cold recovery cycle 3. The first flow regulation valve 35 is configured to regulate a flow rate of the liquid-phase heat medium for cold guided to the second heat exchanger 14.

In the illustrated embodiment, the gas-liquid separator 5 further includes a liquid return port 55 for introducing the liquid-phase heat medium for cold from the liquid return line 6 into the internal space 51. The liquid return port 55 communicates with the internal space 51. One side (upstream end) of the liquid return line 6 is connected to the connecting portion P1 of the first lower-stage connection line 33C, and the other side (downstream end) of the liquid return line 6 is connected to the liquid return port 55. The first flow regulation valve 35 is provided on a downstream side of the connecting portion P1 of the first lower-stage connection line 33C. The first flow regulation valve 35 moves a valve body (not shown) that opens and closes a flow path of the heat medium for cold to be able to regulate the flow rate of the heat medium for cold to be supplied to a downstream side (second heat exchanger 14 side) of the valve body. The first flow regulation valve 35 may be an opening-closing valve whose opening degree can be regulated to be fully closed and fully open, or may be an opening degree regulation valve whose opening degree can be regulated to be fully closed, fully open, and at least one intermediate opening degree between the fully closed and fully open.

### (Turbine for Cold)

The heat medium for cold, which is pressurized by the pump for cold 31 and whose temperature is raised by the second heat exchanger 14, is introduced into the turbine for cold 32 as a working fluid. The turbine for cold 32 includes a rotary shaft 321, a turbine blade 322 attached to the rotary shaft 321, and a casing 323 that rotatably accommodates the turbine blade 322. An introduction inlet 324 for introducing the heat medium for cold into the inside of the casing 323 and a discharge port 325 for discharging the heat medium for cold that has passed through the turbine blade 322 to the outside of the casing 323 are formed in the casing 323. The turbine for cold 32 is configured to rotate the turbine blade 322 by energy of the heat medium for cold introduced into the inside of the casing 323 through the introduction inlet 324. The heat medium for cold that has passed through the turbine blade 322 is discharged to the outside of the casing 323 through the discharge port 325.

The cold recovery cycle 3 is configured to recover a rotational force generated by the turbine blade 322 as power. In the illustrated embodiment, the cold recovery cycle 3 further includes a generator for cold 326 configured to generate power with drive of the turbine for cold 32. The generator for cold 326 is mechanically connected to the rotary shaft 321 and is configured to convert the rotational force of the turbine blade 322 into electric power. In some other embodiments, the cold recovery cycle 3 may not convert the rotational force generated by the turbine blade 322 into electric power and may recover the rotational force as it is, as power, by a power transmission device (for example, coupling, belt, pulley, or the like).

The second connection line 34 described above includes a second upper-stage connection line 34A connecting the downstream end of the second cold-side flow path 141 and the introduction inlet 324 of the turbine for cold 32, and a second lower-stage connection line 34B connecting the discharge port 325 of the turbine for cold 32 and the upstream end of the first cold-side flow path 112.

### (Turbine for Cold-Related Equipment)

As shown in Fig. 1, the cold recovery cycle 3 further includes a turbine bypass line 36 connecting the upstream side and the downstream side of the turbine for cold 32 of the second connection line 34 by bypassing the turbine for cold 32, a turbine-side flow regulation valve 37, and a turbine-bypass-side flow regulation valve 38.

One side (upstream end) of the turbine bypass line 36 is connected to a branching portion P2 of the second upper-stage connection line 34A, and the other side (downstream end) of the turbine bypass line 36 is connected to a merging portion P3 of the second lower-stage connection line 34B. The turbine-side flow regulation valve 37 is provided on a downstream side (turbine for cold 32 side) of the branching portion P2 of the second upper-stage connection line 34A. The turbine-bypass-side flow regulation valve 38 is provided in the turbine bypass line 36. Each of the turbine-side flow regulation valve 37 and the turbine-bypass-side flow regulation valve 38 moves a valve body (not shown) that opens and closes the flow path of the heat medium for cold to be able to regulate the flow rate of the heat medium for cold to be supplied to a downstream side of the valve body. Each of the turbine-side flow regulation valve 37 and the turbine-bypass-side flow regulation valve 38 may be an opening-closing valve whose opening degree can be regulated to be fully closed or fully open, or may be an opening degree regulation valve whose opening degree can be regulated to be fully closed, fully open, and at least one intermediate opening degree between the fully closed and fully open.

With opening (full opening or intermediate opening degree) of the turbine-side flow regulation valve 37 and full closing of the turbine-bypass-side flow regulation valve 38, it is possible to send the heat medium for cold to the first heat exchanger 11 via the turbine for cold 32. Further, with full closing of the turbine-side flow regulation valve 37 and opening (full opening or intermediate opening degree) of the turbine-bypass-side flow regulation valve 38, it is possible to send the heat medium for cold to the first heat exchanger 11 via the turbine bypass line 36.

### (Third Heat Exchanger)

As shown in Fig. 1, the cold recovery system 1 according to some embodiments is further provided with a third heat exchanger 7 configured to transfer the cold energy of the liquefied gas extracted from the liquefied gas storage device 21 to any one of the liquid-phase heat medium for cold that is returned to the gas-liquid separator 5 via the liquid return line 6 or the heat mediums for cold that is present inside the gas-liquid separator 5.

The third heat exchanger (precooler) 7 is configured to exchange heat between the liquefied gas extracted from the liquefied gas storage device 21 and the heat medium for cold circulating via the gas-liquid separator 5 or the liquid return line 6. In the embodiment shown in Fig. 1, the third heat exchanger 7 (7A) includes a third cold-side flow path 71 through which the heat medium for cold provided in the liquid return line 6 flows and a second liquefied-gas-side flow path 72 through which the liquefied gas flows. The heat medium for cold flowing through the third cold-side flow path 71 has a higher temperature than that of the liquefied gas flowing through the second liquefied-gas-side flow path 72.

In the third heat exchanger 7 (7A), with the heat exchange between the heat medium for cold flowing through the third cold-side flow path 71 and the liquefied gas flowing through the second liquefied-gas-side flow path 72, cold energy of the liquefied gas flowing through the second liquefied-gas-side flow path 72 is transferred to the heat medium for cold flowing through the third cold-side flow path 71. Accordingly, the heat medium for cold flowing through the third cold-side flow path 71 is cooled.

### (Liquefied Gas Introduction System For Precooler)

As shown in Fig. 1, the cold recovery system 1 is further provided with a liquefied gas introduction line 81 for guiding the liquefied gas from the liquefied gas storage device 21 to the third heat exchanger 7 and a gas discharge line 82 for guiding the vaporized gas in which the liquefied gas is vaporized from the third heat exchanger 7.

In the embodiment shown in Fig. 1, one side (upstream end) of the liquefied gas introduction line 81 is connected to a connection position P4 on a downstream side of the pump for liquefied gas 15 of the liquefied gas supply line 12. The other side (downstream end) of the liquefied gas introduction line 81 is connected to an upstream end (gas inlet of the third heat exchanger 7) of the second liquefied-gas-side flow path 72. One side (upstream end) of the gas discharge line 82 (82A) is connected to a downstream end (gas outlet of the third heat exchanger 7) of the second liquefied-gas-side flow path 72. The other side (downstream end) of the gas discharge line 82 (82A) is connected to a connection position P5 of the vaporized gas supply line 13.

With drive of the pump for liquefied gas 15, the liquefied gas stored in the liquefied gas storage device 21 is extracted to the liquefied gas supply line 12 and is sent to a portion on an upstream side of the connection position P4 of the liquefied gas supply line 12 and the second liquefied-gas-side flow path 72 of the third heat exchanger 7 through the liquefied gas introduction line 81.

The vaporized gas generated by the vaporization of the liquefied gas in the second liquefied-gas-side flow path 72 of the third heat exchanger 7 is sent, by the pump for liquefied gas 15, to the gas supply destination 22 through the gas discharge line 82 (82A) and a portion on a downstream side of the connection position P5 of the vaporized gas supply line 13.

In the embodiment shown in Fig. 1, the cold recovery system 1 is further provided with a second flow regulation valve 83, a third flow regulation valve 84, a fourth flow regulation valve 85, and a fifth flow regulation valve 86. The second flow regulation valve 83 is an opening degree regulation valve whose opening degree can be regulated to be fully closed, fully open, and at least one intermediate opening degree between the fully closed and fully open. Each of the flow regulation valves 84, 85, and 86 may be an opening-closing valve whose opening degree can be regulated to be fully closed and fully open, or may be an opening degree regulation valve whose opening degree can be regulated to be fully closed, fully open, and at least one intermediate opening degree between the fully closed and fully open.

The second flow regulation valve 83 is provided in the liquefied gas introduction line 81 and is configured to regulate the flow rate of the liquefied gas guided to the third heat exchanger 7. The third flow regulation valve 84 is provided on a downstream side of the connection position P4 of the liquefied gas supply line 12 and is configured to regulate the flow rate of the liquefied gas guided to the first heat exchanger 11. With opening (full opening or intermediate opening degree) of the second flow regulation valve 83 and full closing of the third flow regulation valve 84, it is possible to send the liquefied gas to the third heat exchanger 7 from the liquefied gas storage device 21 by the pump for liquefied gas 15. Further, with full closing of the second flow regulation valve 83 and opening (full opening or intermediate opening degree) of the third flow regulation valve 84, it is possible to send the liquefied gas to the first heat exchanger 11 from the liquefied gas storage device 21 by the pump for liquefied gas 15.

The fourth flow regulation valve 85 is provided on an upstream side of the connection position P5 of the vaporized gas supply line 13 and is configured to regulate the flow rate of the vaporized gas guided to the gas supply destination 22. The fifth flow regulation valve 86 is provided in the gas discharge line 82 and is configured to regulate the flow rate of the vaporized gas guided to the gas supply destination 22. With opening (full opening or intermediate opening degree) of the fourth flow regulation valve 85 and full closing of the fifth flow regulation valve 86, it is possible to send the heat medium for cold to the gas supply destination 22 from the first heat exchanger 11 by the pump for liquefied gas 15. Further, with full closing of the fourth flow regulation valve 85 and opening (full opening or intermediate opening degree) of the fifth flow regulation valve 86, it is possible to send the heat medium for cold to the gas supply destination 22 from the third heat exchanger 7 by the pump for liquefied gas 15.

### (Startup Method for Cold Recovery System)

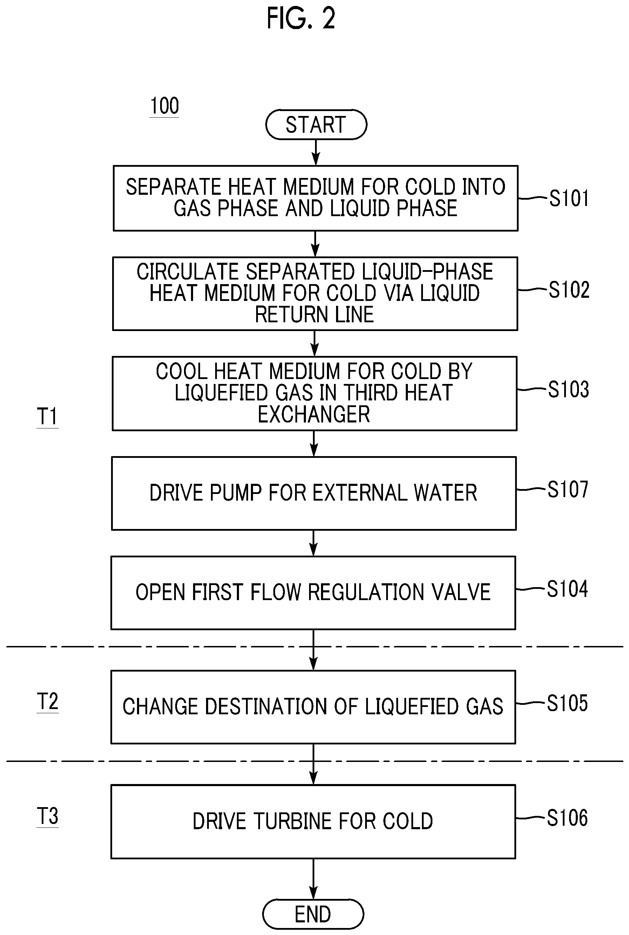

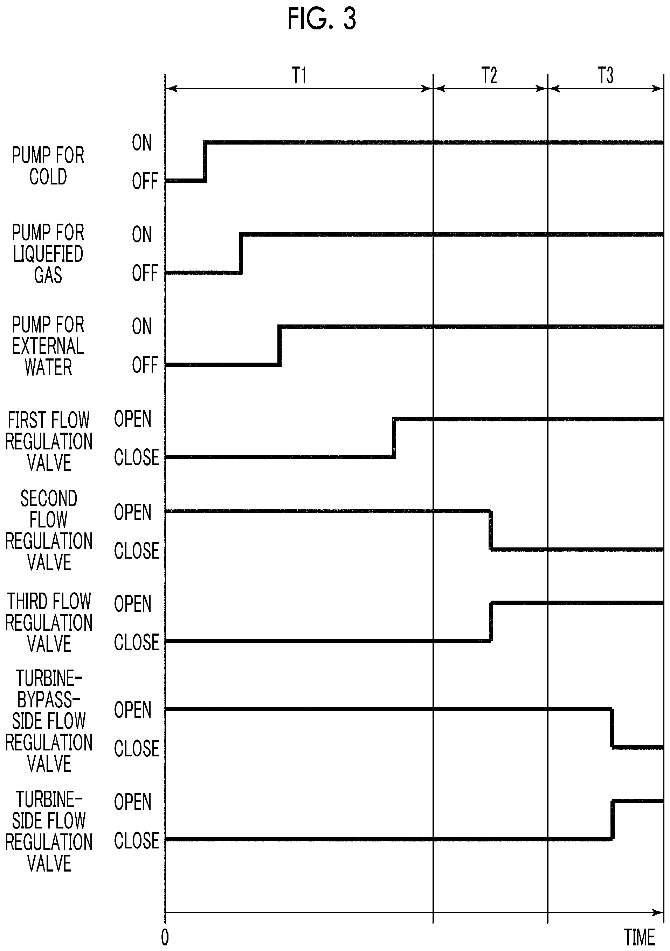

Fig. 2 is a flowchart of a startup method for the cold recovery system according to an embodiment of the present invention. Fig. 3 is an explanatory diagram for describing an example of control in the cold recovery system according to an embodiment of the present invention. As shown in Figs. 2 and 3, a period from the startup of the cold recovery system 1 to a steady operation is classified into a first period (precooling period) T1, a second period (transition period) T2, and a third period T3 (cold recovery period) . The second period T2 is a period after the first period T1 and is a period before the third period T3.

In the first period T1, the liquefied gas extracted from the liquefied gas storage device 21 is sent to the third heat exchanger 7. In the third period T3, the liquefied gas extracted from the liquefied gas storage device 21 is sent to the first heat exchanger 11. In the second period T2, a destination of the liquefied gas extracted from the liquefied gas storage device 21 is changed from the third heat exchanger 7 to the first heat exchanger 11.

As shown in Fig. 2, a startup method 100 of the cold recovery system 1 according to some embodiments is provided with a gas-liquid separation step S101, a circulation step S102, and a cooling step S103.

In the gas-liquid separation step S101, the gas-liquid separator 5 described above separates the heat medium for cold into a gas phase and a liquid phase. The gas-liquid separation step S101 is continuously performed during the period from the startup of the cold recovery system 1 to the steady operation and during the steady operation.

The heat medium for cold may be vaporized in the cold recovery cycle 3 due to heat input from the ambient air to the cold recovery cycle 3 or the gas-liquid separator 5 when the cold recovery system 1 is stopped. For this reason, at the time of startup of the cold recovery system 1, a ratio of the gas-phase heat medium for cold is large on the downstream side of the first heat exchanger 11 in the cold recovery cycle **3,** such as the gas-liquid separator 5 or the pump for cold 31, and in the second heat exchanger 14, as compared with the steady operation of the cold recovery system 1. When the ratio of the gas-phase heat medium for cold in the pump for cold 31 is large, the capacity of the pump for cold 31 may be decreased due to gas entrainment.

In the circulation step S102, the pump for cold 31 is driven to return the liquid-phase heat medium for cold separated in the gas-liquid separation step S101 to the gas-liquid separator 5 via the liquid return line 6. Accordingly, the liquid-phase heat medium for cold circulates through the gas-liquid separator 5, the pump for cold 31, and the liquid return line 6. The circulation step S102 is started in the first period T1 and continuously performed until the second period T2.

Specifically, in the circulation step S102, the pump for cold 31 is driven in a state where the first flow regulation valve 35 is fully closed to extract the liquid-phase heat medium for cold from the gas-liquid separator 5 via the liquid-phase discharge port 54. The liquid-phase heat medium for cold extracted from the gas-liquid separator 5 passes through the first middle-stage connection line 33B, the pump for cold 31, an upstream side of the connecting portion P1 of the first lower-stage connection line 33C, and the liquid return line 6, and then sent to the gas-liquid separator 5 by the pump for cold 31.

In the cooling step S103, the cold energy of the liquefied gas extracted from the liquefied gas storage device 21 is transferred, for cooling, to any one of the liquid-phase heat medium for cold returned to the gas-liquid separator 5 via the liquid return line 6 in the circulation step S102 or the heat medium for cold inside the gas-liquid separator 5.

In the cooling step S103, the liquefied gas is sent from the liquefied gas storage device 21 to the third heat exchanger 7, and the heat medium for cold is cooled by the liquefied gas in the third heat exchanger 7. Accordingly, the liquid-phase heat medium for cold, which circulates through the gas-liquid separator 5, the pump for cold 31, and the liquid return line 6, is cooled. In the illustrated embodiment, the cooling step S103 is started after the circulation step S102 in the first period T1. As shown in Fig. 3, the pump for liquefied gas 15 is driven after the pump for cold 31 is driven.

Specifically, in the cooling step S103, the pump for liquefied gas 15 is driven in a state where the second flow regulation valve 83 or the fifth flow regulation valve 86 is open (fully open or intermediate opening degree) and the third flow regulation valve 84 or the fourth flow regulation valve 85 is fully closed. Accordingly, it is possible to send the liquefied gas from the liquefied gas storage device 21 to the third heat exchanger 7 and to send the vaporized gas from the third heat exchanger 7 to the gas supply destination 22.

In the cooling step S103, with the cooling of the liquid-phase heat medium for cold circulating through the gas-liquid separator 5, the pump for cold 31, and the liquid return line 6, a temperature inside the gas-liquid separator 5 can be lowered. Therefore, it is possible to condense the gas-phase heat medium for cold inside the gas-liquid separator 5. Accordingly, it is possible to increase the ratio of the liquid-phase heat medium for cold at an early stage on the downstream side of the first heat exchanger 11 in the cold recovery cycle 3, such as the gas-liquid separator 5 or the pump for cold 31, and the upstream side of the second heat exchanger 14. With the increase in the ratio of the liquid-phase heat medium for cold in the pump for cold 31, it is possible to suppress the decrease in the capacity of the pump for cold 31 due to gas entrainment and thus to exert the capacity of the pump for cold 31 from an early stage.

In the illustrated embodiment, as shown in Fig. 2, the startup method 100 of the cold recovery system 1 is further provided with a valve opening step S104 of opening (changing from full closing to full opening or intermediate opening degree) the first flow regulation valve 35 after the start of the cooling step S103 to send the heat medium for cold to the first heat exchanger 11 by the pump for cold 31, a change step S105 of changing the destination of the liquefied gas extracted from the liquefied gas storage device 21 to the first heat exchanger 11 from the third heat exchanger 7 after the valve opening step S104, a turbine for cold drive step S106 of guiding the heat medium for cold to the turbine for cold 32 after the change step S105 to drive the turbine for cold 32, and a pump for external water drive step S107 of driving the pump for external water 45 before the valve opening step S104.

The valve opening step S104 is performed, for example, when the temperature inside the gas-liquid separator 5 becomes equal to or lower than a predetermined temperature (temperature at which the heat medium for cold condenses). After the temperature inside the gas-liquid separator 5 becomes equal to or lower than the predetermined temperature, the second flow regulation valve 83 is regulated to maintain the temperature inside the gas-liquid separator 5 within a predetermined range with the predetermined temperature as an upper limit. The liquid-phase heat medium for cold that has passed through the first flow regulation valve 35 is heated by the second heat exchanger 14, vaporized, and then sent to the first heat exchanger 11.

Specifically, the liquid-phase heat medium for cold that has passed through the first flow regulation valve 35 passes through a downstream side of the first flow regulation valve 35 of the first lower-stage connection line 33C, the second cold-side flow path 141 (second heat exchanger 14), an upstream side of the branching portion P2 of the second upper-stage connection line 34A, and a downstream side of the merging portion P3 of the turbine bypass line 36 and the second lower-stage connection line 34B, and is sent to the first cold-side flow path 112 (first heat exchanger 11). As shown in Fig. 3, in the first period T1 and the second period T2, with full closing of the turbine-side flow regulation valve 37 and opening (full opening or intermediate opening degree) of the turbine-bypass-side flow regulation valve 38, the heat medium for cold is sent to the first heat exchanger 11 via the turbine bypass line 36.

The pump for external water 45 is driven before the valve opening step S104 (S107), and the external water is supplied to the heat-medium-side flow path 142 of the second heat exchanger 14. The liquid-phase heat medium for cold that has passed through the first flow regulation valve 35 is heated, for vaporization, by the second heat exchanger 14 with the external water (heat medium). Before the execution of the change step S105, the heat exchange between the liquefied gas and the heat medium for cold is not performed in the first heat exchanger 11. The gas-phase heat medium for cold that has passed through the first heat exchanger 11 is condensed in the gas-liquid separator 5 whose inside is cooled by the third heat exchanger 7.

In the valve opening step S104, with regulation of an opening degree of the first flow regulation valve 35, it is possible to stabilize an amount of the liquid-phase heat medium for cold inside the gas-liquid separator 5.

With execution of the change step S105 during the second period T2 described above, the destination of the liquefied gas extracted from the liquefied gas storage device 21 is changed from the third heat exchanger 7 to the first heat exchanger 11. The turbine for cold drive step S106 is performed during the third period T3 described above. That is, the turbine for cold drive step S106 is performed after the change step S105.

The change step S105 is performed, for example, when the flow rate (amount of the liquid-phase heat medium for cold stored in the lower-side storage space 51B) of the heat medium for cold that can be sent to the first heat exchanger 11 by the pump for cold 31 with the circulation of the liquid-phase heat medium for cold by the pump for cold 31 is equal to or larger than a certain amount. In the change step S105, as shown in Fig. 3, the second flow regulation valve 83 or the fifth flow regulation valve 86 is closed (changed from full opening or intermediate opening degree to full closing), and the third flow regulation valve 84 or the fourth flow regulation valve 85 is open (changed from full closing to full opening or intermediate opening degree) . Accordingly, it is possible to send the liquefied gas from the liquefied gas storage device 21 to the first heat exchanger 11 and to send the vaporized gas from the first heat exchanger 11 to the gas supply destination 22. After the execution of the change step S105, heat exchange between the liquefied gas and the heat medium for cold is performed in the first heat exchanger 11.

In the turbine for cold drive step S106, as shown in Fig. 3, the turbine-side flow regulation valve 37 is open (changed from full closing to full opening or intermediate opening degree), and the turbine-bypass-side flow regulation valve 38 is closed (changed from full opening or intermediate opening degree to full closing). Accordingly, the heat medium for cold, which is pressurized by the pump for cold 31 and whose temperature is raised by the second heat exchanger 14, is introduced into the turbine for cold 32, and the turbine blade 322 of the turbine for cold 32 rotate to drive the turbine for cold 32.

According to the above method, with the cooling of the liquid-phase heat medium for cold circulating through the gas-liquid separator 5, the pump for cold 31, and the liquid return line 6 by the liquefied gas in the third heat exchanger 7 (cooling step S103), it is possible to increase the ratio of the liquid-phase heat medium for cold at an early stage on the downstream side of the first heat exchanger 11 in the cold recovery cycle 3, such as the gas-liquid separator 5 or the pump for cold 31. With the increase in the ratio of the liquid-phase heat medium for cold in the pump for cold 31, it is possible to suppress the decrease in the capacity of the pump for cold 31 due to gas entrainment and thus to exert the capacity of the pump for cold 31 from an early stage. Accordingly, it is possible to shift the cold recovery system 1 to the steady operation at an early stage.

Further, according to the above method, the heat exchange in the first heat exchanger 11 is not performed until the flow rate of the heat medium for cold supplied to the first heat exchanger 11 becomes a large flow rate that does not cause the first heat exchanger 11 to be blocked, and thus it is possible to suppress the blockage of the first heat exchanger 11 at the time of startup of the cold recovery system 1.

As shown in Fig. 1, the cold recovery system 1 according to some embodiments is provided with the first heat exchanger 11 described above, the second heat exchanger 14 described above, the cold recovery cycle 3 described above, the gas-liquid separator 5 described above, the liquid return line 6 described above, and the third heat exchanger 7 described above.

With the above configuration, with the cooling of the liquid-phase heat medium for cold circulating through the gas-liquid separator 5, the pump for cold 31, and the liquid return line 6 by the liquefied gas in the third heat exchanger 7, it is possible to increase the ratio of the liquid-phase heat medium for cold at an early stage on the downstream side of the first heat exchanger 11 in the cold recovery cycle 3, such as the gas-liquid separator 5 or the pump for cold 31. With the increase in the ratio of the liquid-phase heat medium for cold in the pump for cold 31, it is possible to suppress the decrease in the capacity of the pump for cold 31 due to gas entrainment and thus to exert the capacity of the pump for cold 31 from an early stage. Accordingly, it is possible to shift the cold recovery system 1 to the steady operation at an early stage.

Further, with the above configuration, the heat exchange in the first heat exchanger 11 is not performed until the flow rate of the heat medium for cold supplied to the first heat exchanger 11 becomes a large flow rate that does not cause the first heat exchanger 11 to be blocked, and thus it is possible to suppress the blockage of the first heat exchanger 11 at the time of startup of the cold recovery system 1.

In some embodiments, as shown in Fig. 1, the cold recovery system 1 described above is provided with the first flow regulation valve 35 described above. With the above configuration, it is possible to form a closed circuit including the gas-liquid separator 5, the pump for cold 31, and the liquid return line 6 with the closing of the first flow regulation valve 35. With cooling of the heat medium for cold circulating in the closed circuit by the liquefied gas in the third heat exchanger 7, it is possible to quickly lower the temperature inside the gas-liquid separator 5 to the predetermined temperature or lower as compared with a case where the heat medium for cold circulating in the cold recovery cycle 3 wider than the closed circuit is cooled. Accordingly, it is possible to shift the cold recovery system 1 to the steady operation at an early stage.

In some embodiments, as shown in Fig. 1, the third heat exchanger 7 (7A) described above is configured to transfer the cold energy of the liquefied gas extracted from the liquefied gas storage device 21 to the liquid-phase heat medium for cold flowing through the liquid return line 6. With the above configuration, the third heat exchanger 7 (7A) can cool the heat medium for cold flowing through the liquid return line 6 by the liquefied gas. Therefore, it is possible to quickly lower the temperature inside the gas-liquid separator 5 to the predetermined temperature or lower. Accordingly, it is possible to shift the cold recovery system 1 to the steady operation at an early stage.

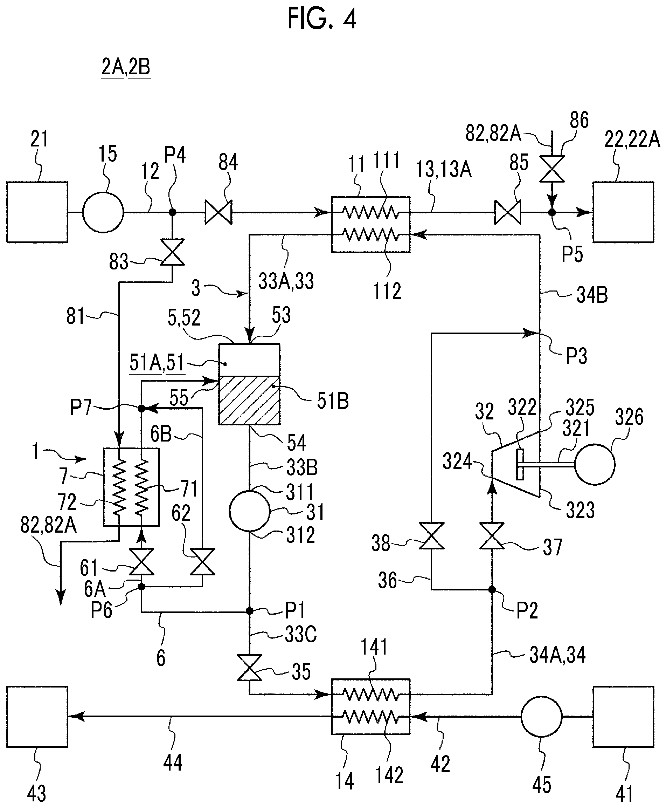

Each of Figs. 4 to 8 is a schematic configuration diagram schematically showing a configuration of a ship or a floating structure provided with a cold recovery system according to an embodiment of the present invention.

In some embodiments, as shown in Fig. 4, the liquid return line 6 described above includes a first liquid return line 6A provided with the third heat exchanger 7 and a second liquid return line 6B that bypasses the third heat exchanger 7.

In the illustrated embodiment, one side (upstream end) of the first liquid return line 6A is connected to the connecting portion P1 of the first lower-stage connection line 33C, and the other side (downstream end) thereof is connected to the liquid return port 55. One side (upstream end) of the second liquid return line 6B is connected to a branching portion P6 located on an upstream side of the third heat exchanger 7 of the first liquid return line 6A, and the other side (downstream end) thereof is connected to a merging portion P7 located on a downstream side of the third heat exchanger 7 of the first liquid return line 6A.

As shown in Fig. 4, the liquid return line 6 described above may further include a first opening-closing valve 61 provided between the branching portion P6 of the first liquid return line 6A and the third heat exchanger 7 and a second opening-closing valve 62 provided in the second liquid return line 6B. With opening of the first opening-closing valve 61 and full closing of the second opening-closing valve 62, the circulating heat medium for cold passes through the third heat exchanger 7. With full closing of the first opening-closing valve 61 and opening of the second opening-closing valve 62, the circulating heat medium for cold passes through the second liquid return line 6B (bypass the third heat exchanger 7).

During the steady operation of the cold recovery system 1, the pump for cold 31 is rotated at a steady rotation speed. Even after the valve opening step S104 is executed, the heat medium for cold is circulated through the liquid return line 6.

With the above configuration, when the third heat exchanger 7 does not need to cool the heat medium for cold (for example, during steady operation), pressure loss in the third heat exchanger 7 can be suppressed by causing the circulating heat medium for cold to pass through the second liquid return line 6B (bypass the third heat exchanger 7). Therefore, it is possible to effectively exert performance of the cold recovery cycle 3 during the steady operation of the cold recovery system 1.

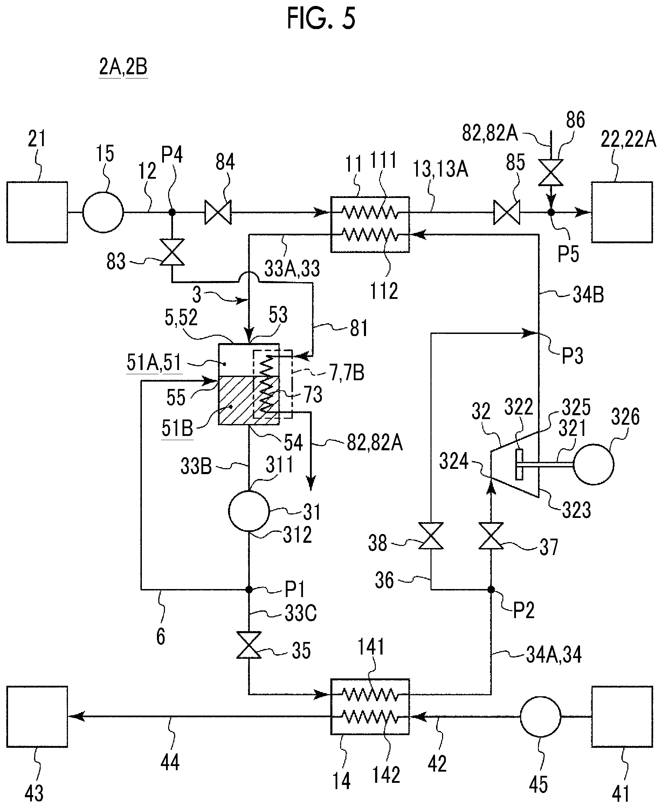

In some embodiments, as shown in Fig. 5, the third heat exchanger 7 (7B) is configured to transfer the cold energy of the liquefied gas extracted from the liquefied gas storage device 21 to the heat medium for cold inside the gas-liquid separator 5.

In the embodiment shown in Fig. 5, the third heat exchanger 7 (7B) includes a third liquefied-gas-side flow path 73 through which the liquefied gas disposed in the internal space 51 of the gas-liquid separator 5 flows. As shown in Fig. 5, the third liquefied-gas-side flow path 73 may be a pipeline through which the liquefied gas can flow and a pipeline whose outer surface faces the internal space 51.

The other side (downstream end) of the liquefied gas introduction line 81 is connected to an upstream end (gas inlet of the third heat exchanger 7) of the third liquefied-gas-side flow path 73. One side (upstream end) of the gas discharge line 82 is connected to a downstream end (gas outlet of the third heat exchanger 7) of the third liquefied-gas-side flow path 73. The heat medium for cold in the internal space 51 has a higher temperature than that of the liquefied gas flowing through the third liquefied-gas-side flow path 73.

In the third heat exchanger 7 (7B), with the heat exchange between the heat medium for cold in the internal space 51 and the liquefied gas flowing through the third liquefied-gas-side flow path 73, cold energy of the liquefied gas flowing through the third liquefied-gas-side flow path 73 is transferred to the heat medium for cold in the internal space 51. Accordingly, the heat medium for cold in the internal space 51 is cooled.

With the above configuration, the third heat exchanger 7 (7B) can cool the heat medium for cold inside the gas-liquid separator 5 by the liquefied gas. Therefore, it is possible to quickly lower the temperature inside the gas-liquid separator 5 to the predetermined temperature or lower. Accordingly, it is possible to shift the cold recovery system 1 to the steady operation at an early stage.

In some embodiments, as shown in Figs. 1, 4, 6, and 7, the gas supply destination 22 described above includes a main engine 22A of the ship 2A or the floating structure 2B. The main engine 22A is configured to generate a driving force (thrust) for driving a propulsion unit (not shown) such as a propeller by using energy of the supplied vaporized gas. The vaporized gas supply line 13 described above includes a fuel supply line 13A for supplying the liquefied gas vaporized by the first heat exchanger 11 to the main engine 22A of the ship 2A or the floating structure 2B.

In the embodiments shown in Figs. 1 and 4, the gas discharge line 82 (82A) described above includes a flow path for guiding the vaporized gas obtained by vaporizing the liquefied gas from the third heat exchanger 7 to the main engine 22A. In this case, the vaporized gas that has passed through the third heat exchanger 7 is guided to the main engine 22A via the gas discharge line 82 (82A) or the like.

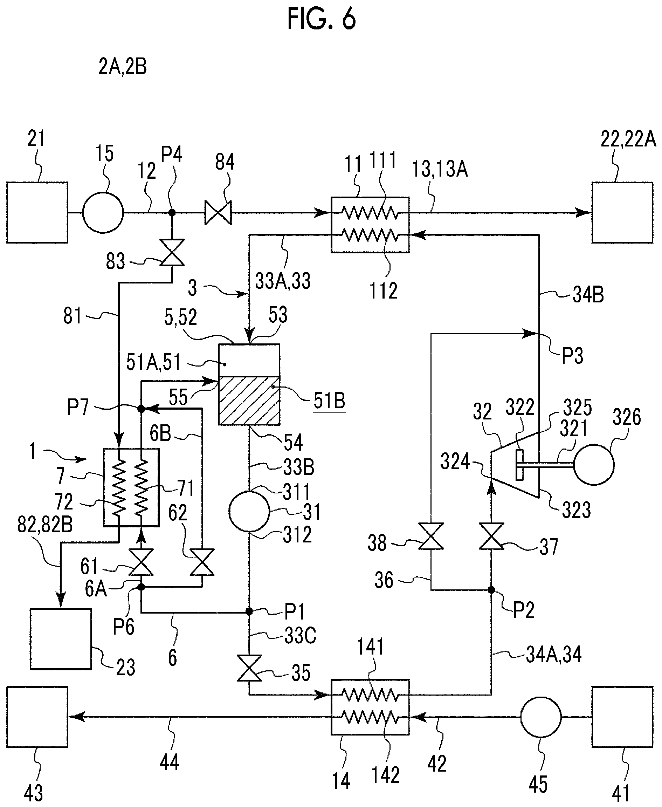

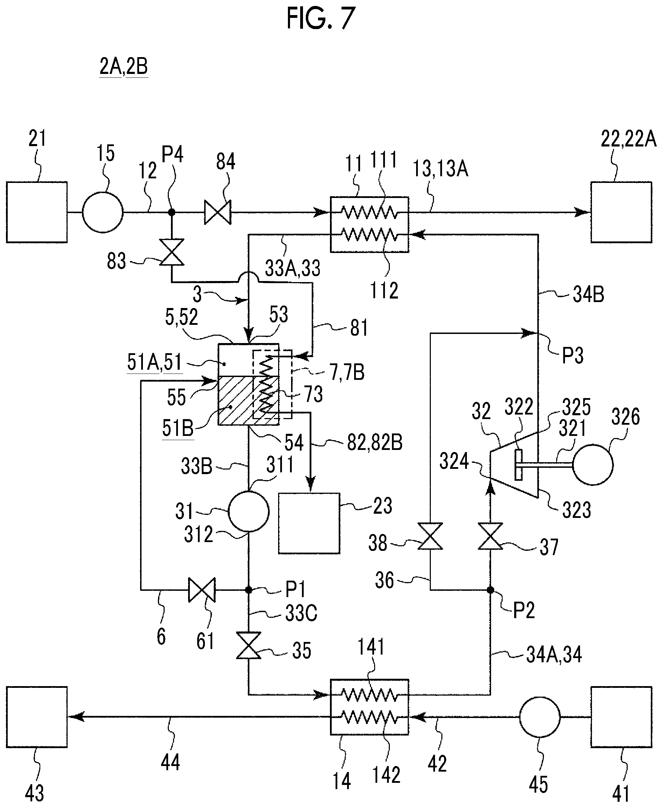

In the embodiments shown in Figs. 6 and 7, the gas discharge line 82 includes a startup gas supply line 82B for guiding the vaporized gas obtained by vaporizing the liquefied gas from the third heat exchanger 7 to a gas combustion device 23 configured separately from the main engine 22A. The gas combustion device 23 is configured to combust the supplied gas. One side (downstream end) of the startup gas supply line 82B is connected to a gas inlet of the gas combustion device 23.

In the embodiment shown in Fig. 6, the other side (upstream end) of the startup gas supply line 82B is connected to the downstream end (gas outlet of the third heat exchanger 7) of the second liquefied-gas-side flow path 72. In the embodiment shown in Fig. 7, the other side (upstream end) of the startup gas supply line 82B is connected to the downstream end (gas outlet of the third heat exchanger 7) of the third liquefied-gas-side flow path 73.

The flow rate of the heat medium for cold circulating in the cold recovery cycle 3 is small at the time of startup of the cold recovery system 1. Thus, the liquefied gas is supplied to the main engine 22A without being sufficiently vaporized and a failure or malfunction of the main engine 22A may occur. With the configurations shown in Figs. 6 and 7, at the time of startup of the cold recovery system 1, the vaporized gas or the liquefied gas can be combusted in the gas combustion device 23 by being guided to the gas combustion device 23 via the startup gas supply line 82B. Accordingly, the supply of the liquefied gas to the main engine 22A without being sufficiently vaporized can be suppressed, and thus it is possible to suppress a failure or malfunction of the main engine 22A. Further, with the configurations shown in Figs. 6 and 7, it is not necessary to completely vaporize the liquefied gas in the third heat exchanger 7 at the time of startup of the cold recovery system 1, and thus it is possible to drive the cold recovery cycle 3 or the pump for external water 45 from an early stage. Accordingly, it is possible to shift the cold recovery system 1 to the steady operation at an early stage.

### (Bypass Line of Second Heat Exchanger)

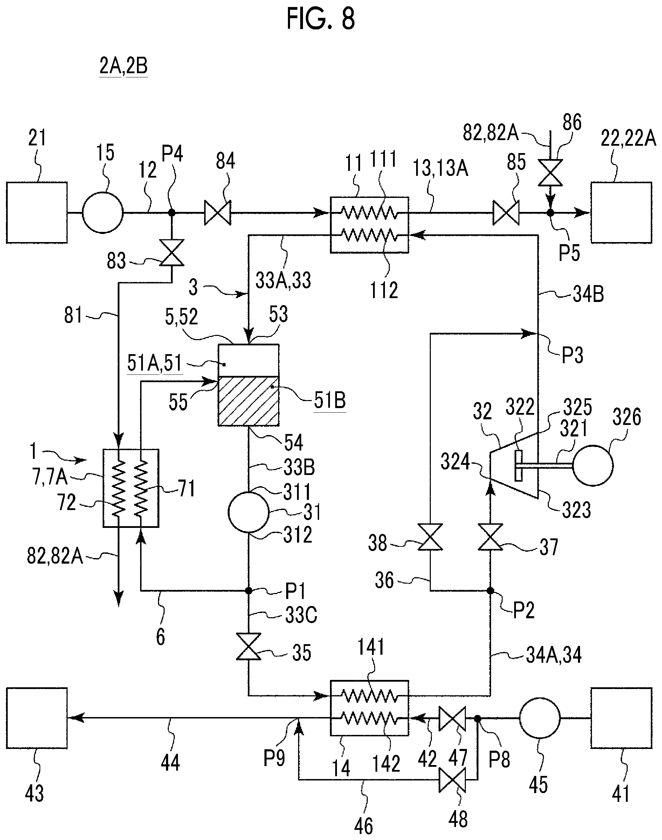

In some embodiments, as shown in Fig. 8, the cold recovery system 1 described above may be configured to not perform the heat exchange between the heat medium for cold and the external water in the second heat exchanger 14 when the pump for external water 45 is in a drive state. In the illustrated embodiment, the cold recovery system 1 is further provided with a heat-exchanger-side bypass line 46 that connects the external water supply line 42 and the external water discharge line 44 by bypassing the second heat exchanger 14. One side (upstream end) of the heat-exchanger-side bypass line 46 is connected to a branching portion P8 of the external water supply line 42. The other side (downstream end) of the heat-exchanger-side bypass line 46 is connected to a merging portion P9 of the external water discharge line 44.

The cold recovery system 1 described above may be further provided with a first external-water-side opening-closing valve 47 provided on a downstream side of the branching portion P8 of the external water supply line 42 and a second external-water-side opening-closing valve 48 provided in the heat-exchanger-side bypass line 46. With opening of the first external-water-side opening-closing valve 47 and full closing of the second external-water-side opening-closing valve 48, the external water passes through the second heat exchanger 14. With full closing of the first external-water-side opening-closing valve 47 and opening of the second external-water-side opening-closing valve 48, the external water passes through the heat-exchanger-side bypass line 46 (bypass the second heat exchanger 14).

A period until the pump for external water 45 transits to a steady state is required from the start of driving the pump for external water 45, and the flow rate of the external water supplied to the second heat exchanger 14 is not stable during this period. Thus, the heating of the heat medium for cold in the second heat exchanger 14 may not be stable. The external water is caused to pass through the heat-exchanger-side bypass line 46 during the period until the pump for external water 45 transits to the steady state, and thus a stable operation becomes possible when the cold recovery system 1 transits to the steady operation. In the startup method 100 of the cold recovery system 1 described above, the external water may be caused to pass through the heat-exchanger-side bypass line 46 for a predetermined period from the start of the pump for external water drive step S107. The valve opening step S104 may be started during the predetermined period.

The cold recovery system 1 may be provided with, instead of the heat-exchanger-side bypass line 46, a bypass line that connects a portion on the downstream side of the connecting portion P1 of the first lower-stage connection line 33C and a portion on the upstream side of the branching portion P2 of the second upper-stage connection line 34A by bypassing the second heat exchanger 14.

### (Control Device)

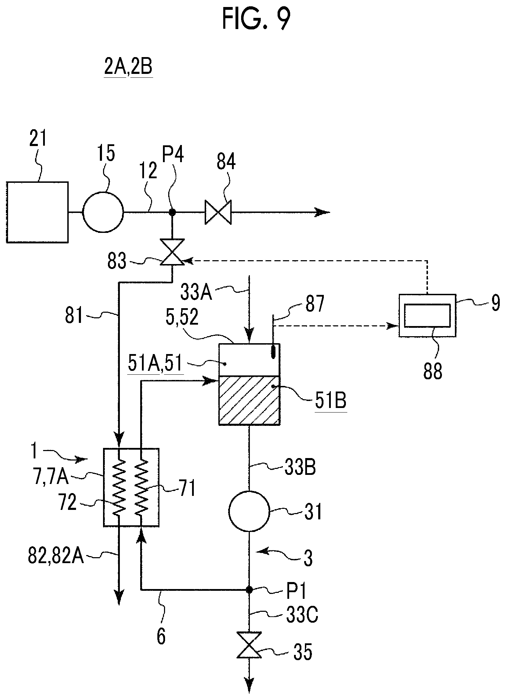

Fig. 9 is an explanatory diagram for describing a control device for a cold recovery system according to an embodiment of the present invention. In some embodiments, as shown in Fig. 9, the cold recovery system 1 is further provided with a temperature acquisition device (temperature sensor in the illustrated example) 87 configured to acquire the temperature of the heat medium for cold inside the gas-liquid separator 5 and a valve opening degree control device 88 that controls the opening degree of the second flow regulation valve 83 such that the temperature of the heat medium for cold acquired by the temperature acquisition device 87 falls within a predetermined range. With increase in the opening degree of the second flow regulation valve 83 by the valve opening degree control device 88, the flow rate of the liquefied gas supplied to the third heat exchanger 7 can be increased. Therefore, it is possible to cool the inside of the gas-liquid separator 5 by the increased flow rate.

In the illustrated embodiment, the valve opening degree control device 88 is mounted on a control device 9 configured to perform operation control of a pump provided in the cold recovery system 1 and opening degree control of a valve provided in the cold recovery system 1. The pump (pump for cold 31 or the like) provided in the cold recovery system 1 is configured to be driven or stopped in accordance with an operation instruction of the control device 9. The valve (first flow regulation valve 35 or the like) provided in the cold recovery system 1 is configured to regulate the valve opening degree in accordance with an opening degree instruction of the control device 9. The cold recovery system 1 is provided with the control device 9. Some steps in the startup method 100 may be performed by the control device 9. Further, in some steps in the startup method 100, a device or equipment other than the control device 9 may be used or a manual operation may be performed.

The control device 9 is an electronic control unit that controls the cold recovery system 1. The control device 9 is configured as a microcomputer consisting of a CPU (processor) (not shown), a memory such as a ROM or a RAM, a storage device such as an external storage device, an I/O interface, a communication interface, and the like. In the control device 9, the CPU may operate (for example, data calculation) in accordance with a command of a program loaded in a main storage device of the memory to realize the control in the valve opening degree control device 88.

With the above configuration, with the control of the opening degree of the second flow regulation valve 83 by the valve opening degree control device 88 and the maintaining of the temperature of the heat medium for cold acquired by the temperature acquisition device 87 within the predetermined range, it is possible to suppress the decrease in the capacity of the pump for cold 31 due to gas entrainment at an early stage and to stabilize the temperature of the heat medium for cold flowing in a circulation cycle or the cold recovery cycle 3 including the gas-liquid separator 5, the pump for cold 31, and the liquid return line 6 at an early stage. Accordingly, since the valve opening step S104, the change step S105, or the like can be executed at an early stage, the cold recovery system 1 can be transferred to the steady operation at an early stage.

The present invention as defined by the appended claims is not limited to the embodiments described above and includes a form in which a modification is added to the embodiments described above or a form in which the above forms are combined as appropriate.

The contents described in some embodiments described above are understood as follows, for example.

1) A cold recovery system (1) according to at least one embodiment of the present invention is
   a cold recovery system (1) that is installed in a ship (2A) or a floating structure (2B) having a liquefied gas storage device (21) configured to store the liquefied gas and includes
   a first heat exchanger (11) that is configured to transfer cold energy from the liquefied gas extracted from the liquefied gas storage device (21) to a heat medium for cold,
   a cold recovery cycle (3) that is configured to circulate the heat medium for cold and includes at least a pump for cold (31) to send the heat medium for cold provided on a downstream side of the first heat exchanger (11),
   a second heat exchanger (14) that is configured to transfer heat energy from a heat medium to the heat medium for cold that flows on a downstream side of the pump for cold (31) and an upstream side of the first heat exchanger (11) in the cold recovery cycle (3),
   a gas-liquid separator (5) that is provided between the first heat exchanger (11) and the pump for cold (31) in the cold recovery cycle (3) and is configured to separate the heat medium for cold into a gas-phase heat medium for cold and a liquid-phase heat medium for cold,
   a liquid return line (6) for returning the liquid-phase heat medium for cold to the gas-liquid separator (5) from the downstream side of the pump for cold (31) and an upstream side of the second heat exchanger (14) in the cold recovery cycle (3), and
   a third heat exchanger (7) that is configured to transfer the cold energy of the liquefied gas extracted from the liquefied gas storage device (21) to any one of the liquid-phase heat medium for cold returned to the gas-liquid separator (5) via the liquid return line (6) or the heat medium for cold inside the gas-liquid separator (5).

With the configuration of 1) above, with the cooling of the liquid-phase heat medium for cold circulating through the gas-liquid separator (5), the pump for cold (31), and the liquid return line (6) by the liquefied gas in the third heat exchanger (7), it is possible to increase the ratio of the liquid-phase heat medium for cold at an early stage on the downstream side of the first heat exchanger (11) in the cold recovery cycle (3), such as the gas-liquid separator (5) or the pump for cold (31). With the increase in the ratio of the liquid-phase heat medium for cold in the pump for cold (31), it is possible to suppress the decrease in the capacity of the pump for cold (31) due to gas entrainment and thus to exert the capacity of the pump for cold (31) from an early stage. Accordingly, it is possible to shift the cold recovery system (1) to the steady operation at an early stage.

Further, with the configuration of 1) above, the heat exchange in the first heat exchanger (11) is not performed until the flow rate of the heat medium for cold supplied to the first heat exchanger (11) becomes a large flow rate that does not cause the first heat exchanger (11) to be blocked, and thus it is possible to suppress the blockage of the first heat exchanger (11) at the time of startup of the cold recovery system (1).

2) In some embodiments, the cold recovery system (1) according to 1) above,
in which the third heat exchanger (7) is configured to transfer the cold energy of the liquefied gas extracted from the liquefied gas storage device (21) to the liquid-phase heat medium for cold flowing through the liquid return line (6) .

With the configuration of 2) above, the third heat exchanger (7) can cool the heat medium for cold flowing through the liquid return line (6) by the liquefied gas. Therefore, it is possible to quickly lower the temperature inside the gas-liquid separator (5) to the predetermined temperature or lower. Accordingly, it is possible to shift the cold recovery system (1) to the steady operation at an early stage.

3) In some embodiments, the cold recovery system (1) according to 1) above,
in which the third heat exchanger (7) is configured to transfer the cold energy of the liquefied gas extracted from the liquefied gas storage device (21) to the heat medium for cold inside the gas-liquid separator (5).

With the configuration of the above 3), the third heat exchanger (7) can cool the heat medium for cold inside the gas-liquid separator (5) by the liquefied gas. Therefore, it is possible to quickly lower the temperature inside the gas-liquid separator (5) to the predetermined temperature or lower. Accordingly, it is possible to shift the cold recovery system (1) to the steady operation at an early stage.

4) In some embodiments, the cold recovery system (1) according to 2) above,
in which the liquid return line (6) includes
a first liquid return line (6A) provided with the third heat exchanger (7), and
a second liquid return line (6B) that bypasses the third heat exchanger (7).

With the configuration of the above 4), when the third heat exchanger (7) does not need to cool the heat medium for cold, pressure loss in the third heat exchanger (7) can be suppressed by causing the circulating heat medium for cold to pass through the second liquid return line (6B) (bypass the third heat exchanger (7)). Therefore, it is possible to effectively exert performance of the cold recovery cycle (3) during the steady operation of the cold recovery system (1).

5) In some embodiments, the cold recovery system (1) according to any one of 1) to 4) above, further including
a fuel supply line (13A) for supplying the liquefied gas vaporized by the first heat exchanger (11) to a main engine (22A) of the ship (2A) or the floating structure (2B), and
a startup gas supply line (82B) for guiding a vaporized gas obtained by vaporizing the liquefied gas from the third heat exchanger (7) to a gas combustion device (23) configured of a body separate from the main engine (22A).

The flow rate of the heat medium for cold circulating in the cold recovery cycle (3) is small at the time of startup of the cold recovery system (1). Thus, the liquefied gas is supplied to the main engine (22A) without being sufficiently vaporized and a failure or malfunction of the main engine (22A) may occur. With the configuration of the above 5), at the time of startup of the cold recovery system (1), the vaporized gas or the liquefied gas can be combusted in the gas combustion device (23) by being guided to the gas combustion device (23) via the startup gas supply line (82B). Accordingly, the supply of the liquefied gas to the main engine (22A) without being sufficiently vaporized can be suppressed, and thus it is possible to suppress a failure or malfunction of the main engine (22A). Further, with the configuration of 5) above, it is not necessary to completely vaporize the liquefied gas in the third heat exchanger (7) at the time of startup of the cold recovery system (1), and thus it is possible to drive the cold recovery cycle 3 or the pump for external water 45 from an early stage. Accordingly, it is possible to shift the cold recovery system (1) to the steady operation at an early stage.

6) In some embodiments, the cold recovery system (1) according to any one of 1) to 5) above, further including
a first flow regulation valve (35) that is provided between a connecting portion (P1) with an upstream end of the liquid return line (6) and the second heat exchanger (14) in the cold recovery cycle (3) and is configured to regulate a flow rate of the liquid-phase heat medium for cold guided to the second heat exchanger (14).

With the configuration of 6) above, it is possible to form a closed circuit including the gas-liquid separator (5), the pump for cold (31), and the liquid return line (6) with the closing of the first flow regulation valve (35). With cooling of the heat medium for cold circulating in the closed circuit by the liquefied gas in the third heat exchanger (7), it is possible to quickly lower the temperature inside the gas-liquid separator (5) to the predetermined temperature or lower as compared with a case where the heat medium for cold circulating in the cold recovery cycle (3) wider than the closed circuit is cooled. Accordingly, it is possible to shift the cold recovery system (1) to the steady operation at an early stage.

7) In some embodiments, the cold recovery system (1) according to any one of 1) to 6) above, further including
a liquefied gas introduction line (81) that connects the liquefied gas storage device (21) and the third heat exchanger (7),
a second flow regulation valve (83) that is provided in the liquefied gas introduction line (81) and is configured to regulate a flow rate of the liquefied gas guided to the third heat exchanger,
a temperature acquisition device (87) configured to acquire a temperature of the heat medium for cold in the gas-liquid separator (5), and
a valve opening degree control device (88) that controls an opening degree of the second flow regulation valve (83) such that the temperature of the heat medium for cold acquired by the temperature acquisition device (87) falls within a predetermined range.

With the configuration of 7) above, with the control of the opening degree of the second flow regulation valve (83) by the valve opening degree control device (88) and the maintaining of the temperature of the heat medium for cold acquired by the temperature acquisition device (87) within the predetermined range, it is possible to suppress the decrease in the capacity of the pump for cold (31) due to gas entrainment at an early stage and to stabilize the temperature of the heat medium for cold flowing in a circulation cycle or the cold recovery cycle (3) including the gas-liquid separator (5), the pump for cold (31), and the liquid return line (6) at an early stage. Accordingly, it is possible to shift the cold recovery system (1) to the steady operation at an early stage.

8) A startup method (100) for a cold recovery system according to at least one embodiment of the present invention is
a startup method (100) for a cold recovery system (1) that is installed in a ship (2A) or a floating structure (2B) having a liquefied gas storage device (21) configured to store a liquefied gas,
in which the cold recovery system (1) includes
a first heat exchanger (11) that is configured to transfer cold energy from the liquefied gas extracted from the liquefied gas storage device (21) to a heat medium for cold,
a cold recovery cycle (3) that is configured to circulate the heat medium for cold and includes at least a pump for cold (31) to send the heat medium for cold provided on a downstream side of the first heat exchanger (11), and
a second heat exchanger (14) that is configured to transfer heat energy from a heat medium to the heat medium for cold (31) that flows on a downstream side of the pump for cold and an upstream side of the first heat exchanger (11) in the cold recovery cycle (3), and
the startup method (100) for the cold recovery system includes
a gas-liquid separation step (S101) of separating the heat medium for cold into a gas-phase heat medium for cold and a liquid-phase heat medium for cold by a gas-liquid separator (5) that is provided between the first heat exchanger (11) and the pump for cold (31) in the cold recovery cycle (3),
a circulation step (S102) of returning the liquid-phase heat medium for cold, which is separated in the gas-liquid separation step (S101) by drive of the pump for cold (31), to the gas-liquid separator (5) via a liquid return line (6) for connecting the downstream side of the pump for cold (31) and an upstream side of the second heat exchanger (14) in the cold recovery cycle (3) with the gas-liquid separator (5), and
a cooling step (S103) of transferring, for cooling, the cold energy of the liquefied gas extracted from the liquefied gas storage device (21) to any one of the liquid-phase heat medium for cold returned to the gas-liquid separator (5) via the liquid return line (6) or the heat medium for cold inside the gas-liquid separator (5), in the circulation step (S102).

According to the method of 8) above, with the cooling of the liquid-phase heat medium for cold circulating through the gas-liquid separator (5), the pump for cold (31), and the liquid return line (6) by the liquefied gas (cooling step S103), it is possible to increase the ratio of the liquid-phase heat medium for cold at an early stage on the downstream side of the first heat exchanger (11) in the cold recovery cycle (3), such as the gas-liquid separator (5) or the pump for cold (31). With the increase in the ratio of the liquid-phase heat medium for cold in the pump for cold (31), it is possible to suppress the decrease in the capacity of the pump for cold (31) due to gas entrainment and thus to exert the capacity of the pump for cold (31) from an early stage. Accordingly, it is possible to shift the cold recovery system (1) to the steady operation at an early stage.

Further, according to the method 8) above, the heat exchange in the first heat exchanger (11) is not performed until the flow rate of the heat medium for cold supplied to the first heat exchanger (11) becomes a large flow rate that does not cause the first heat exchanger (11) to be blocked, and thus it is possible to suppress the blockage of the first heat exchanger (11) at the time of startup of the cold recovery system (1).

### Reference Signs List

1: cold recovery system
2A: ship
2B: floating structure
3: cold recovery cycle
5: gas-liquid separator
6: liquid return line
7: third heat exchanger
9: control device
11: first heat exchanger
12: liquefied gas supply line
13: vaporized gas supply line
13A: fuel supply line
14: second heat exchanger
15: pump for liquefied gas
21: liquefied gas storage device
22: gas supply destination
22A: main engine
31: pump for cold
32: turbine for cold
33: first connection line
33A: first upper-stage connection line
33B: first middle-stage connection line
33C: first lower-stage connection line
34: second connection line
34A: second upper-stage connection line
34B: second lower-stage connection line
35: first flow regulation valve
36: turbine bypass line
37: turbine-side flow regulation valve
38: turbine-bypass-side flow regulation valve
41: external water supply source
42: external water supply line
43: external water discharge destination
44: external water discharge line
45: pump for external water
46: heat-exchanger-side bypass line
47: first external-water-side opening-closing valve
48: second external-water-side opening-closing valve
51: internal space
51A: upper-side storage space
51B: lower-side storage space
52: main body portion
53: introduction inlet
54: liquid-phase discharge port
55: liquid return port
61: first opening-closing valve
62: second opening-closing valve
81: liquefied gas introduction line
82: gas discharge line
83: second flow regulation valve
84: third flow regulation valve
85: fourth flow regulation valve
86: fifth flow regulation valve
87: temperature acquisition device
88: valve opening degree control device
100: startup method
S101: gas-liquid separation step
S102: circulation step
S103: cooling step
S104: valve opening step
S105: change step
S106: turbine for cold drive step
S107: pump for external water drive step

## Claims

1. A cold recovery system (1) suitable to be installed in a ship (2A) or a floating structure (2B) having a liquefied gas storage device (21) configured to store a liquefied gas, the cold recovery system (1) comprising:
a first heat exchanger (11) that is configured to transfer cold energy from the liquefied gas extracted from the liquefied gas storage device (21) to a heat medium for cold;
a cold recovery cycle (3) that is configured to circulate the heat medium for cold and includes at least a pump (31) for cold to send the heat medium for cold provided on a downstream side of the first heat exchanger (11); and
a second heat exchanger (14) that is configured to transfer heat energy from a heat medium to the heat medium for cold that flows on a downstream side of the pump (31) for cold and an upstream side of the first heat exchanger (11) in the cold recovery cycle (3);
**characterized by** further comprising:
a gas-liquid separator (5) that is provided between the first heat exchanger (11) and the pump (31) for cold in the cold recovery cycle (3) and is configured to separate the heat medium for cold into a gas-phase heat medium for cold and a liquid-phase heat medium for cold;
a liquid return line (6) for returning the liquid-phase heat medium for cold to the gas-liquid separator (5) from the downstream side of the pump (31) for cold and an upstream side of the second heat exchanger (14) in the cold recovery cycle (3); and
a third heat exchanger (7) that is configured to transfer the cold energy of the liquefied gas extracted from the liquefied gas storage device (21) to any one of the liquid-phase heat medium for cold returned to the gas-liquid separator (5) via the liquid return line (6) or the heat medium for cold inside the gas-liquid separator (5).

2. The cold recovery system according to Claim 1,
wherein the liquid return line (6) includes
a first liquid return line (6A) provided with the third heat exchanger (7), and
a second liquid return line (6B) that bypasses the third heat exchanger (7).

3. The cold recovery system (1) according to Claim 1 or 2, further comprising:
a fuel supply line (13A) for supplying the liquefied gas vaporized by the first heat exchanger (11) to a main engine (22A) of the ship (2A) or the floating structure (2B); and
a startup gas supply line (82B) for guiding at least one of the liquefied gas or a vaporized gas obtained by vaporizing the liquefied gas from the third heat exchanger (7) to a gas combustion device (23) configured of a body separate from the main engine (22A).

4. The cold recovery system (1) according to any one of Claims 1 to 3, further comprising:
a first flow regulation valve (35) that is provided between a connecting portion with an upstream end of the liquid return line (6) and the second heat exchanger (14) in the cold recovery cycle (3) and is configured to regulate a flow rate of the liquid-phase heat medium for cold guided to the second heat exchanger (14).

5. The cold recovery system according to any one of Claims 1 to 4, further comprising:
a liquefied gas introduction line (81) that connects the liquefied gas storage device (21) and the third heat exchanger (7);
a second flow regulation valve (83) that is provided in the liquefied gas introduction line (81) and is configured to regulate a flow rate of the liquefied gas guided to the third heat exchanger (7);
a temperature acquisition device (87) configured to acquire a temperature of the heat medium for cold in the gas-liquid separator (5); and
a valve opening degree control device (88) that controls an opening degree of the second flow regulation valve (83) such that the temperature of the heat medium for cold acquired by the temperature acquisition device falls within a predetermined range.

6. A startup method (100) for a cold recovery system (1) installed in a ship (2A) or a floating structure (2B) having a liquefied gas storage device (21) configured to store a liquefied gas, in which the cold recovery system (1) includes
a first heat exchanger (11) that is configured to transfer cold energy from the liquefied gas extracted from the liquefied gas storage device (21) to a heat medium for cold,
a cold recovery cycle (3) that is configured to circulate the heat medium for cold and includes at least a pump (31) for cold to send the heat medium for cold provided on a downstream side of the first heat exchanger (11), and
a second heat exchanger (14) that is configured to transfer heat energy from a heat medium to the heat medium for cold that flows on a downstream side of the pump (31) for cold and an upstream side of the first heat exchanger (11) in the cold recovery cycle (3), the startup method (100) being **characterized by** comprising:
a gas-liquid separation step (S101) of separating the heat medium for cold into a gas-phase heat medium for cold and a liquid-phase heat medium for cold by a gas-liquid separator (5) that is provided between the first heat exchanger (11) and the pump (31) for cold in the cold recovery cycle (3);
a circulation step (S102) of returning the liquid-phase heat medium for cold, which is separated in the gas-liquid separation step (S101) by drive of the pump (31) for cold, to the gas-liquid separator (5) via a liquid return line (6) for connecting the downstream side of the pump (31) for cold and an upstream side of the second heat exchanger (14) in the cold recovery cycle (3) with the gas-liquid separator (5); and
a cooling step (S103) of transferring, for cooling, the cold energy of the liquefied gas extracted from the liquefied gas storage device (21) to any one of the liquid-phase heat medium for cold returned to the gas-liquid separator (5) via the liquid return line or the heat medium for cold inside the gas-liquid separator (5), in the circulation step (S102).

## Patentansprüche

1. Kälterückgewinnungssystem (1), geeignet, um in einem Schiff (2A) oder einer schwimmenden Struktur (2B), das eine Flüssiggas-Speichervorrichtung (21) aufweist, die dazu ausgebildet ist, Flüssiggas zu speichern, installiert zu werden, wobei das Kälterückgewinnungssystem (1) umfasst:
einen ersten Wärmetauscher (11), der dazu ausgebildet ist, Kälteenergie von dem aus der Flüssiggas-Speichervorrichtung (21) entnommenen Flüssiggas auf ein Kälteträgermedium zu übertragen;
einen Kälterückgewinnungskreislauf (3), der dazu ausgebildet ist, das Kälteträgermedium zu zirkulieren und zumindest eine Kältepumpe (31) zum Fördern des Kälteträgermediums einschließt, um das auf einer stromabwärtigen Seite des ersten Wärmetauschers (11) bereitgestellte Kälteträgermedium zu senden; und
einen zweiten Wärmetauscher (14), der dazu ausgebildet ist, Wärmeenergie von einem Wärmeträgermedium auf das Kälteträgermedium zu übertragen, das auf einer stromabwärtigen Seite der Kältepumpe (31) und einer stromaufwärtigen Seite des ersten Wärmetauschers (11) im Kälterückgewinnungskreislauf (3) fließt;
**gekennzeichnet dadurch, dass** es weiter Folgendes umfasst:
einen Gas-Flüssigkeitsabscheider (5), der zwischen dem ersten Wärmetauscher (11) und der Kältepumpe (31) im Kälterückgewinnungskreislauf (3) bereitgestellt ist und dazu ausgebildet ist, das Kälteträgermedium in ein gasphasiges Kälteträgermedium und ein flüssigphasiges Kälteträgermedium zu trennen;
eine Flüssigkeitsrückführleitung (6) zum Rückführen des flüssigphasigen Kälteträgermediums zu dem Gas-Flüssigkeitsabscheider (5) von der stromabwärtigen Seite der Kältepumpe (31) und einer stromaufwärtigen Seite des zweiten Wärmetauschers (14) im Kälterückgewinnungskreislauf (3); und
einen dritten Wärmetauscher (7), der dazu ausgebildet ist, die Kälteenergie des aus der Flüssiggas-Speichervorrichtung (21) entnommenen Flüssiggases auf eines von dem flüssigphasigen Kälteträgermedium, das über die Flüssigkeitsrückführleitung (6) zu dem Gas-Flüssigkeitsabscheider (5) zurückgeführt wird, oder dem Kälteträgermedium innerhalb des Gas-Flüssigkeitsabscheiders (5) zu übertragen.

2. Kälterückgewinnungssystem nach Anspruch 1,
wobei die Flüssigkeitsrückführleitung (6) Folgendes einschließt
eine erste Flüssigkeitsrückführleitung (6A), die mit dem dritten Wärmetauscher (7) versehen ist, und
eine zweite Flüssigkeitsrückführleitung (6B), die den dritten Wärmetauscher (7) umgeht.

3. Kälterückgewinnungssystem (1) nach Anspruch 1 oder 2, weiter umfassend:
eine Brennstoffversorgungsleitung (13A) zum Zuführen des durch den ersten Wärmetauscher (11) verdampften Flüssiggases zu einem Hauptmotor (22A) des Schiffs (2A) oder der schwimmenden Struktur (2B); und
eine Startgasversorgungsleitung (82B) zum Leiten von zumindest einem von dem Flüssiggas oder einem verdampften Gas, das durch Verdampfen des Flüssiggases von dem dritten Wärmetauscher (7) erhalten wird, zu einer Gasverbrennungsvorrichtung (23), die als ein vom Hauptmotor (22A) getrennter Körper ausgebildet ist.

4. Kälterückgewinnungssystem (1) nach einem der Ansprüche 1 bis 3, weiter umfassend:
ein erstes Durchflussregelventil (35), das zwischen einem Verbindungsabschnitt mit einem stromaufwärtigen Ende der Flüssigkeitsrückführleitung (6) und dem zweiten Wärmetauscher (14) im Kälterückgewinnungskreislauf (3) bereitgestellt ist und dazu ausgebildet ist, eine Durchflussrate des flüssigphasigen Kälteträgermediums zu regeln, das zu dem zweiten Wärmetauscher (14) geführt wird.

5. Kälterückgewinnungssystem nach einem der Ansprüche 1 bis 4, weiter umfassend:
eine Flüssiggas-Einleitungsleitung (81), die die Flüssiggas-Speichervorrichtung (21) und den dritten Wärmetauscher (7) verbindet;
ein zweites Durchflussregelventil (83), das in der Flüssiggas-Einleitungsleitung (81) bereitgestellt ist und dazu ausgebildet ist, eine Durchflussrate des zu dem dritten Wärmetauscher (7) geführten Flüssiggases zu regeln;
eine Temperaturerfassungsvorrichtung (87), die dazu ausgebildet ist, eine Temperatur des Kälteträgermediums in dem Gas-Flüssigkeitsabscheider (5) zu erfassen; und
eine Vorrichtung (88) zur Steuerung des Ventilöffnungsgrades, die einen Öffnungsgrad des zweiten Durchflussregelventils (83) so regelt, dass die Temperatur des Kälteträgermediums, die von der Temperaturerfassungsvorrichtung erfasst wird, innerhalb eines vorbestimmten Bereichs fällt.

6. Startverfahren (100) für ein Kälterückgewinnungssystem (1), das in einem Schiff (2A) oder einer schwimmenden Struktur (2B), das eine Flüssiggas-Speichervorrichtung (21) aufweist, die dazu ausgebildet ist, Flüssiggas zu speichern, installiert ist, in dem das Kälterückgewinnungssystem (1) Folgendes einschließt
einen ersten Wärmetauscher (11), der dazu ausgebildet ist, Kälteenergie von dem aus der Flüssiggas-Speichervorrichtung (21) entnommenen Flüssiggas auf ein Kälteträgermedium zu übertragen,
einen Kälterückgewinnungskreislauf (3), der dazu ausgebildet ist, das Kälteträgermedium zu zirkulieren und zumindest eine Kältepumpe (31) zum Fördern des Kälteträgermediums einschließt, um das auf einer stromabwärtigen Seite des ersten Wärmetauschers (11) bereitgestellte Kälteträgermedium zu senden, und
einen zweiten Wärmetauscher (14), der dazu ausgebildet ist, Wärmeenergie von einem Wärmeträgermedium auf das Kälteträgermedium zu übertragen, das auf einer stromabwärtigen Seite der Kältepumpe (31) und einer stromaufwärtigen Seite des ersten Wärmetauschers (11) im Kälterückgewinnungskreislauf (3) fließt, wobei das Startverfahren (100) **dadurch gekennzeichnet ist, dass** es umfasst:
einen Gas-Flüssigkeitstrennungsschritt (S101) des Trennens des Kälteträgermediums in ein gasphasiges Kälteträgermedium und ein flüssigphasiges Kälteträgermedium durch einen Gas-Flüssigkeitsabscheider (5), der zwischen dem ersten Wärmetauscher (11) und der Kältepumpe (31) im Kälterückgewinnungskreislauf (3) bereitgestellt ist;
einen Zirkulationsschritt (S102) des Rückführens des flüssigphasigen Kälteträgermediums, das in dem Gas-Flüssigkeitstrennungsschritt (S101) durch Antrieb der Kältepumpe (31) getrennt wird, zu dem Gas-Flüssigkeitsabscheider (5) über eine Flüssigkeitsrückführleitung (6) zum Verbinden der stromabwärtigen Seite der Kältepumpe (31) und einer stromaufwärtigen Seite des zweiten Wärmetauschers (14) im Kälterückgewinnungskreislauf (3) mit dem Gas-Flüssigkeitsabscheider (5); und
einen Kühlschritt (S103) des Übertragens, zum Kühlen, der Kälteenergie des aus der Flüssiggas-Speichervorrichtung (21) entnommenen Flüssiggases auf eines von dem flüssigphasigen Kälteträgermedium, das über die Flüssigkeitsrückführleitung zu dem Gas-Flüssigkeitsabscheider (5) zurückgeführt wird, oder dem Kälteträgermedium innerhalb des Gas-Flüssigkeitsabscheiders (5), im Zirkulationsschritt (S102).

## Revendications

1. Système (1) de récupération de froid adapté pour être installé dans un navire (2A) ou une structure flottante (2B) présentant un dispositif (21) de stockage de gaz liquéfié configuré pour stocker un gaz liquéfié, le système (1) de récupération de froid comprenant :
un premier échangeur de chaleur (11) qui est configuré pour transférer de l'énergie froide du gaz liquéfié extrait du dispositif (21) de stockage de gaz liquéfié à un fluide caloporteur pour le froid ;
un cycle (3) de récupération de froid qui est configuré pour faire circuler le fluide caloporteur pour le froid et inclut au moins une pompe (31) pour le froid pour envoyer le fluide caloporteur pour le froid prévu sur un côté aval du premier échangeur de chaleur (11) ; et
un deuxième échangeur de chaleur (14) qui est configuré pour transférer de l'énergie thermique d'un fluide caloporteur au fluide caloporteur pour le froid qui circule sur un côté aval de la pompe (31) pour le froid et sur un côté amont du premier échangeur de chaleur (11) dans le cycle (3) de récupération de froid ;
**caractérisé en ce qu'**il comprend en outre :
un séparateur gaz-liquide (5) qui est prévu entre le premier échangeur de chaleur (11) et la pompe (31) pour le froid dans le cycle (3) de récupération de froid et est configuré pour séparer le fluide caloporteur pour le froid en un fluide caloporteur pour le froid en phase gazeuse et un fluide caloporteur pour le froid en phase liquide ;
une conduite (6) de retour de liquide pour renvoyer le fluide caloporteur pour le froid en phase liquide vers le séparateur gaz-liquide (5) depuis le côté aval de la pompe (31) pour le froid et un côté amont du deuxième échangeur de chaleur (14) dans le cycle (3) de récupération de froid ; et
un troisième échangeur de chaleur (7) qui est configuré pour transférer l'énergie froide du gaz liquéfié extrait du dispositif (21) de stockage de gaz liquéfié à l'un quelconque du fluide caloporteur pour le froid en phase liquide renvoyé vers le séparateur gaz-liquide (5) par l'intermédiaire de la conduite (6) de retour de liquide ou du fluide caloporteur pour le froid à l'intérieur du séparateur gaz-liquide (5).

2. Système de récupération de froid selon la revendication 1,
dans lequel la conduite (6) de retour de liquide inclut
une première conduite (6A) de retour de liquide prévue avec le troisième échangeur de chaleur (7), et
une deuxième conduite (6B) de retour de liquide qui contourne le troisième échangeur de chaleur (7).

3. Système (1) de récupération de froid selon la revendication 1 ou la revendication 2, comprenant en outre :
une conduite (13A) d'alimentation en combustible pour fournir le gaz liquéfié vaporisé par le premier échangeur de chaleur (11) à un moteur principal (22A) du navire (2A) ou de la structure flottante (2B) ; et
une conduite (82B) d'alimentation en gaz de démarrage pour guider au moins l'un du gaz liquéfié ou d'un gaz vaporisé obtenu en vaporisant le gaz liquéfié depuis le troisième échangeur de chaleur (7) vers un dispositif (23) de combustion de gaz configuré comme un corps séparé du moteur principal (22A).

4. Système (1) de récupération de froid selon l'une quelconque des revendications 1 à 3, comprenant en outre :
une première vanne (35) de régulation de débit qui est prévue entre une portion de raccordement avec une extrémité amont de la conduite (6) de retour de liquide et le deuxième échangeur de chaleur (14) dans le cycle (3) de récupération de froid et est configurée pour réguler un débit du fluide caloporteur pour le froid en phase liquide guidé vers le deuxième échangeur de chaleur (14).

5. Système de récupération de froid selon l'une quelconque des revendications 1 à 4, comprenant en outre :
une conduite (81) d'introduction de gaz liquéfié qui relie le dispositif (21) de stockage de gaz liquéfié et le troisième échangeur de chaleur (7) ;
une deuxième vanne (83) de régulation de débit qui est prévue dans la conduite (81) d'introduction de gaz liquéfié et est configurée pour réguler un débit du gaz liquéfié guidé vers le troisième échangeur de chaleur (7) ;
un dispositif (87) d'acquisition de température configuré pour acquérir une température du fluide caloporteur pour le froid dans le séparateur gaz-liquide (5) ; et
un dispositif (88) de commande de degré d'ouverture de vanne qui commande un degré d'ouverture de la deuxième vanne (83) de régulation de débit de sorte que la température du fluide caloporteur pour le froid acquise par le dispositif d'acquisition de température tombe dans une plage prédéterminée.

6. Procédé de démarrage (100) pour un système (1) de récupération de froid installé dans un navire (2A) ou une structure flottante (2B) présentant un dispositif (21) de stockage de gaz liquéfié configuré pour stocker un gaz liquéfié, dans lequel le système (1) de récupération de froid inclut
un premier échangeur de chaleur (11) qui est configuré pour transférer de l'énergie froide du gaz liquéfié extrait du dispositif (21) de stockage de gaz liquéfié à un fluide caloporteur pour le froid,
un cycle (3) de récupération de froid qui est configuré pour faire circuler le fluide caloporteur pour le froid et inclut au moins une pompe (31) pour le froid pour envoyer le fluide caloporteur pour le froid prévu sur un côté aval du premier échangeur de chaleur (11), et
un deuxième échangeur de chaleur (14) qui est configuré pour transférer de l'énergie thermique d'un fluide caloporteur au fluide caloporteur pour le froid qui circule sur un côté aval de la pompe (31) pour le froid et sur un côté amont du premier échangeur de chaleur (11) dans le cycle (3) de récupération de froid, le procédé de démarrage (100) étant **caractérisé en ce qu'**il comprend :
une étape (S101) de séparation gaz-liquide consistant à séparer le fluide caloporteur pour le froid en un fluide caloporteur pour le froid en phase gazeuse et un fluide caloporteur pour le froid en phase liquide par un séparateur gaz-liquide (5) qui est prévu entre le premier échangeur de chaleur (11) et la pompe (31) pour le froid dans le cycle (3) de récupération de froid ;
une étape de circulation (S102) consistant à renvoyer le fluide caloporteur pour le froid en phase liquide, qui est séparé dans l'étape (S101) de séparation gaz-liquide par l'entraînement de la pompe (31) pour le froid, vers le séparateur gaz-liquide (5) par l'intermédiaire d'une conduite (6) de retour de liquide pour relier le côté aval de la pompe (31) pour le froid et un côté amont du deuxième échangeur de chaleur (14) dans le cycle (3) de récupération de froid au séparateur gaz-liquide (5) ; et
une étape de refroidissement (S103) consistant à transférer, pour refroidir, l'énergie froide du gaz liquéfié extrait du dispositif (21) de stockage de gaz liquéfié à l'un quelconque du fluide caloporteur pour le froid en phase liquide renvoyé vers le séparateur gaz-liquide (5) par l'intermédiaire de la conduite de retour de liquide ou du fluide caloporteur pour le froid à l'intérieur du séparateur gaz-liquide (5), dans l'étape de circulation (S102).
